(19) Europäisches Patentamt
European Patent Office
Office européen des brevets

(11) EP 4 651 292 A2

(12) **EUROPEAN PATENT APPLICATION**

(43) Date of publication:
**19.11.2025 Bulletin 2025/47**

(21) Application number: **25173107.1**

(22) Date of filing: **29.04.2025**

(51) International Patent Classification (IPC):
***H01M 50/414*** *(2021.01)* ***H01M 50/42*** *(2021.01)*
***H01M 50/426*** *(2021.01)* ***H01M 50/434*** *(2021.01)*
***H01M 50/443*** *(2021.01)* ***H01M 50/446*** *(2021.01)*
***H01M 50/451*** *(2021.01)* ***H01M 50/457*** *(2021.01)*

(52) Cooperative Patent Classification (CPC):
**H01M 50/457; H01M 50/414; H01M 50/42; H01M 50/426; H01M 50/434; H01M 50/443; H01M 50/446; H01M 50/451**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.04.2024 KR 20240057500**

(71) Applicant: **SAMSUNG SDI CO., LTD.**
**Yongin-si, Gyeonggi-do 17084 (KR)**

(72) Inventor: **Kim, Nam Ju**
**Suwon-si, Gyeonggi-do 16678 (KR)**

(74) Representative: **Gulde & Partner**
**Patent- und Rechtsanwaltskanzlei mbB**
**Berliner Freiheit 2**
**10785 Berlin (DE)**

(54) **SEPARATOR FOR RECHARGEABLE LITHIUM BATTERY AND RECHARGEABLE LITHIUM BATTERY INCLUDING THE SAME**

(57) Examples of present disclosure include a separator for a rechargeable lithium battery and a rechargeable lithium battery including the separator. The separator for a rechargeable lithium battery includes a porous base and a coating layer on at least one surface of the porous base. The coating layer includes a heat-resistant layer including a binder and a filler, and an adhesive layer on the heat-resistant layer and including an adhesive binder. The binder includes a (meth)acryl-based binder including a first structural unit derived from (meth)acrylic acid, (meth)acrylate, or salts thereof, a second structural unit derived from hydroxyalkyl (meth)acrylate, and a third structural unit derived from (meth)acrylamido sulfonic acid or a salt thereof. The filler includes a cubic filler having a particle size D50 ranges from 50 nm to 250 nm. The adhesive binder includes a fluorine-based adhesive binder having a carboxylic acid group or a hydroxy group.

FIG. 3

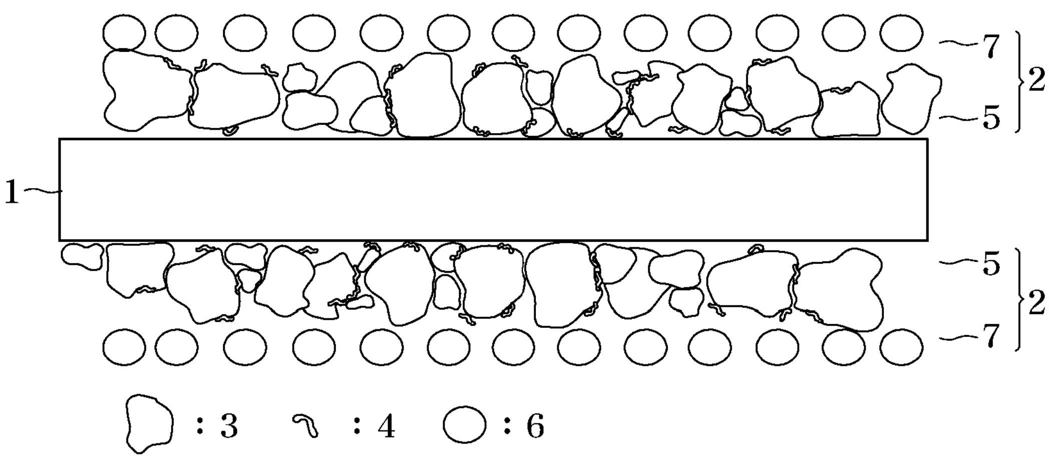


EP 4 651 292 A2

## Description

BACKGROUND

### 1. Field of the Disclosure

The present disclosure includes a separator for a rechargeable lithium battery, and a rechargeable lithium battery including the separator.

### 2. Discussion of Related Art

With increasing presence of electronic devices that use batteries, such as, e.g., mobile phones, laptop computers, electric vehicles, and the like, the demand for rechargeable batteries with high energy density and high capacity has increased. Accordingly, improving performance of rechargeable lithium batteries may be advantageous.

A rechargeable lithium battery typically includes a positive electrode and a negative electrode including an active material which allows for intercalation and deintercalation of lithium ions and an electrolyte, and produces electrical energy through an oxidation-reduction reaction taking place when the lithium ions are intercalated and deintercalated to and from the positive electrode and the negative electrode.

The rechargeable lithium battery may further include a separator between the positive electrode and the negative electrode. It may be advantageous for the separator to have a low membrane resistance and a high heat resistance, resulting in low thermal shrinkage.

SUMMARY

The invention is defined by the appended claims. The description that follows is subjected to this limitation. Any disclosure lying outside the scope of said claims is only intended for illustrative as well as comparative purposes.

One example embodiment includes a separator for a rechargeable lithium battery, which has low membrane resistance, thereby improving the capacity of the rechargeable lithium battery.

Another example embodiment includes a separator for a rechargeable lithium battery, which has a significantly low thermal shrinkage rate, thereby improving the safety and service life of the rechargeable lithium battery.

Still another example embodiment includes a rechargeable lithium battery including the separator for a rechargeable lithium battery.

One example embodiment is or includes a separator for a rechargeable lithium battery.

The separator for a rechargeable lithium battery includes a porous base and a coating layer on at least one surface of the porous base. The coating layer includes a heat-resistant layer including a binder and a filler, and an adhesive layer located on the heat-resistant layer and including an adhesive binder. The binder includes a (meth)acryl-based binder including a first structural unit derived from (meth)acrylic acid, (meth)acrylate, or salts thereof, a second structural unit derived from a hydroxyalkyl (meth)acrylate, and a third structural unit derived from (meth)acrylamido sulfonic acid or a salt thereof. The filler includes a substantially cubic filler having a particle size D50 that ranges from 50 nm to 250 nm. The adhesive binder includes a fluorine-based adhesive binder having a carboxylic acid group (COOH) or a hydroxy group.

Another example embodiment is or includes a rechargeable lithium battery.

The rechargeable lithium battery includes a positive electrode, a negative electrode, and a separator for the rechargeable lithium battery between the positive electrode and the negative electrode.

BRIEF DESCRIPTION OF THE DRAWINGS

FIG. 1 shows the SEM results of a coating layer including a cubic filler having a particle size D50 of 200 nm, according to one example embodiment.

FIG. 2 shows the SEM results of a coating layer including a plate-shaped filler having a particle size D50 of 300 nm, according to an example embodiment.

FIG. 3 is a cross-sectional view illustrating a separator for a rechargeable lithium battery, according to one example embodiment.

FIGS. 4 to 7 are cross-sectional views schematically illustrating a rechargeable lithium battery, according to one example embodiment.

FIGS. 8A and 8B show the SEM results of a coating layer in a separator of Example 1. FIG. 8A is a result of 10x magnification, and FIG. 8B is a result of 20x magnification.

FIGS. 9A and 9B show the SEM results of a coating layer in a separator of Comparative Example 4. FIG. 9A is a result of 10x magnification, and FIG. 9B is a result of 20x magnification.

DETAILED DESCRIPTION

Hereinafter, example embodiments of the present disclosure are described in detail. However, the embodiments are presented as examples, and the present disclosure is not limited thereto, and the present disclosure is only defined by the scope of the appended claims.

Unless otherwise stated herein, when a part such as a layer, a membrane, an area, a plate, etc. is described as being disposed "on" another part, it includes not only a case where the part is "directly on" another part, but also a case where there are other parts therebetween.

Unless otherwise stated herein, the singular may also include the plural.

In the present specification, "a combination thereof" may indicate a mixture, stack, composite, copolymer, alloy, blend, or reaction product of constituents.

Unless otherwise defined herein, a particle size is an average particle size. In addition, the particle size refers to an average particle size D50, which refers to a size of a particle with a cumulative volume of 50% by volume in a particle size distribution. The average particle size D50 may be measured by methods known to those skilled in the art and for example, may be measured using a particle size analyzer, a transmission electron microscope photograph, or a scanning electron microscope photograph. As another method, the average particle size D50 may be obtained by measuring the particle size using a measuring device using dynamic light scattering, performing data analysis to count the number of particles for each particle size range, and then calculating the average particle size D50 therefrom. Alternatively, the average particle size D50 may be measured using a laser diffraction method. When measuring the average particle size by the laser diffraction method, for example, the average particle size D50 based on 50% of a particle size distribution in the measuring device may be calculated by dispersing particles to be measured in a dispersion medium, then introducing the dispersion medium into a commercially available laser diffraction particle size measuring device (e.g., Microtrac's MT 3000), and radiating ultrasonic waves of 28 kHz with an output of 60 W.

In the present specification, "(meth)acryl" refers to acryl and/or methacryl.

Hereinafter, unless otherwise defined, "substitution" indicates that hydrogen in a compound is substituted with a substituent selected from the group consisting of of a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group ($-NO_2$), a cyano group (-CN), an amino group (-NRR') (here, R and R' are each independently hydrogen or a C1 to C6 alkyl group), a sulfobetaine group ($-RR'N+(CH_2)_nSO_3-$, n is a natural number from 1 to 10), a carboxybetaine group ($-RR'N+(CH_2)_nCOO-$, n is a natural number from 1 to 10) (here, R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$), a carbamoyl group ($-C(O)NH_2$), a thiol group (-SH), an acyl group (-C(=O)R, here, R denotes hydrogen, a C1 to C6 alkyl group, a C1 to C6 alkoxy group , or a C6 to C12 aryl group), a carboxyl group (-COOH) or a salt thereof (-C(=O)OM, here, M denotes an organic or inorganic cation), a sulfonic acid group ($-SO_3H$) or a salt thereof ($-SO_3M$, here, M denotes an organic or inorganic cation), and a phosphate group ($-PO_3H_2$) or a salt thereof ($-PO_3MH$ or $-PO_3M_2$, here, M denotes an organic or inorganic cation).

Hereinafter, the C1 to C3 alkyl group may be or include at least one of a methyl group, an ethyl group, or a propyl group. The C1 to C10 alkylene group may be or include, for example, at least one of a C1 to C6 alkylene group, a C1 to C5 alkylene group, or a C1 to C3 alkylene group and may be or include, for example, at least one of a methylene group, an ethylene group, or a propylene group. The C3 to C20 cycloalkylene group may be or include, for example, at least one of a C3 to C10 cycloalkylene group, or a C5 to C10 cycloalkylene group, for example, a cyclohexylene group. The C6 to C20 arylene group may be or include, for example, a C6 to C10 arylene group, for example, a phenylene group. The C3 to C20 heterocyclic group may be or include, for example, a C3 to C10 heterocyclic group, for example, a pyridine group.

Hereinafter, "hetero" indicates including one or more heteroatoms such as or including at least one of N, O, S, Si, and P.

In addition, in the chemical formulas, the symbol * refers to a part that is connected to the same or different atom, group, or structural unit.

Hereinafter, "alkali metal" refers to an element belonging to Group 1 of the periodic table, such as or including at least one of lithium, sodium, potassium, rubidium, cesium, or francium, and may be present in a cationic or neutral state.

In the present specification, when describing a numerical range, "X to Y" indicates "X or more and Y or less ($X\leq$ and $\leq Y$)."

A separator for a rechargeable lithium battery according to one example embodiment includes a porous base and a coating layer located on at least one surface of the porous base. The coating layer includes a heat-resistant layer including a binder and a filler, and an adhesive layer located on the heat-resistant layer and including an adhesive binder,

the binder includes a (meth)acryl-based binder including a first structural unit derived from (meth)acrylic acid, (meth) acrylate, or salts thereof, a second structural unit derived from a hydroxyalkyl (meth)acrylate, and a third structural unit derived from (meth)acrylamido sulfonic acid or a salt thereof, the filler includes a substantially cubic filler having a particle size D50 that ranges from 50 nm to 250 nm, and the adhesive binder includes a fluorine-based adhesive binder having a carboxylic acid group (COOH) or a hydroxy group.

According to one example embodiment, the heat-resistant layer may be formed of or include a composition including the (meth)acryl-based binder and the substantially cubic filler having a particle size D50 that ranges from 50 nm to 250 nm.

The coating layer exhibits a significantly low membrane resistance and a low thermal shrinkage rate, thereby providing a separator for a rechargeable lithium battery having a high heat resistance and a low resistance. Accordingly, the service life and safety of a rechargeable lithium battery may be improved. The coating layer includes the above-described adhesive binder to increase positive electrode adhesive strength, and simultaneously or contemporaneously includes the above-described (meth)acryl-based binder and the above-described filler, thereby providing low membrane resistance and air permeability in a desired range along with the above-described low thermal shrinkage rate.

According to one example embodiment, the separator may have a membrane resistance of 1 Ω or less.

According to one example embodiment, the separator may have a thermal shrinkage rate in each of a mechanical direction (MD) and a transverse direction (TD) of 5% or less after the separator is left at 200 °C for 1 hour.

According to one example embodiment, the separator may have a positive electrode adhesive strength of 0. 75 gf/mm or more.

According to one example embodiment, the separator may have air permeability that is less than 200 sec/ 100 cc.

The membrane resistance, thermal shrinkage rate, positive electrode adhesive strength, and air permeability may be measured according to methods described below.

**Coating layer**

The coating layer may be or include a heat-resistant adhesive layer. The coating layer includes a heat-resistant layer, and an adhesive layer located on the heat-resistant layer.

The coating layer includes a binder, and in the binder, a (meth)acryl-based binder described below may be included in an amount of 95 wt% or more, for example, an amount in the range of 95 wt% to 100 wt%, an amount in the range of 99 wt% to 100 wt%, or an amount of 100 wt%.

The (meth)acryl-based binder may fix the filler to a porous base, ensure that the coating layer is bonded to the porous base and an electrode, and contribute to increasing the heat resistance, air permeability, and oxidation resistance of the separator. For example, the (meth)acryl-based binder may facilitate the movement of lithium ions to decrease membrane resistance and improve ion conductivity, may increase the adhesion of the coating layer to the porous base and the electrode, and may increase the dispersibility of the filler in the coating layer. In another example, the (meth)acryl-based binder may provide a separator with low membrane resistance in a coating layer including a filler described below.

With respect to 100 mol% of the (meth)acryl-based binder, a total of the first structural unit, the second structural unit, and the third structural unit may be 95 mol% or more, for example, in the range of 95 mol% to 100 mol%, for example, 100 mol%. Within the above range, the above-described effects of the separator can be readily achieved.

The first structural unit is derived from at least one of (meth)acrylic acid, (meth)acrylate, or salts thereof, and may be configured to fix the filler to the porous base, provide adhesive strength so that the coating layer is bonded to the porous base and the electrode, and contribute to increasing the heat resistance and air permeability of the separator. For example, by having a carboxyl functional group (-C(=O)O-) in the structural unit, the first structural unit may increase the dispersibility of a coating slurry.

The first structural unit may be represented by any one of Chemical Formulas 1 to 3 below:

Chemical Formula 1: Chemical Formula 2: Chemical Formula 3:

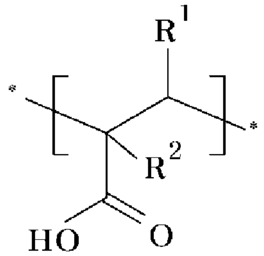
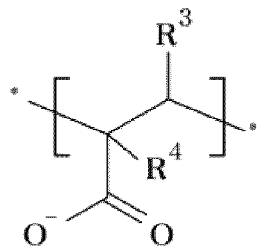
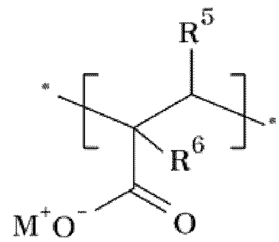

With respect to 100 mol% of the binder for a rechargeable lithium battery, the first structural unit may be included in an amount ranging from 25 mol% to 65 mol%, for example, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 557, 58, 59, 60, 61, 62, 63, 64, 65 mol%, 30 mol% to 65 mol%, 30 mol% to 60 mol%, or 40 mol% to 65 mol%. When the first structural unit is included within the above range, the separator can exhibit low membrane resistance, desired or improved adhesion, heat resistance, air permeability, and oxidation resistance to the porous base and the electrode.

According to one example embodiment, the first structural unit may include a structural unit represented by Chemical Formula 2 above and a structural unit represented by Chemical Formula 3 above, and in this case, the structural unit represented by Chemical Formula 2 above and the structural unit represented by Chemical Formula 3 above may be included in a molar ratio in the range of 10:1 to 1:2, 10:1 to 1:1, or 5:1 to 1:1.

According to another example embodiment, the first structural unit may only include the structural unit represented by Chemical Formula 2 above.

The second structural unit is derived from a hydroxyalkyl (meth)acrylate, and may be configured to fix the filler to the porous base, and provide adhesive strength so that the coating layer is bonded to the porous base and the electrode. For example, by having a carboxyl functional group (-C(=O)O-) in the structural unit, the second structural unit may increase the dispersibility of a coating slurry.

The second structural unit may be represented by Chemical Formula 4 below:

Chemical Formula 4:

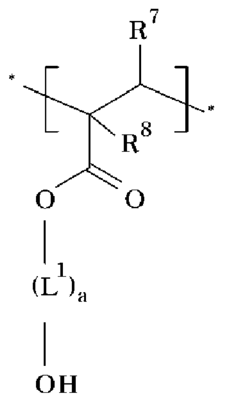

With respect to 100 mol% of the binder for a rechargeable lithium battery, the second structural unit may be included in an amount ranging from 1 mol% to 20 mol% or for example 1, 2, 3, 4, 5, 6, 7, 8, 9, 10, 11, 12, 13, 14, 15, 16, 17, 18, 19, 20 mol%, 5 mol% to 15 mol%. When the second structural unit is included within the above range, it may be possible to increase the adhesion of the coating layer to the porous base and the electrode.

For example, the second structural unit may be or include a structural unit derived from a hydroxyalkyl (meth) acrylate. Here, the alkyl may be or include at least one of a C1 to C20 alkyl, a C1 to C10 alkyl, or a C1 to C6 alkyl.

For example, the hydroxyalkyl (meth)acrylate may include at least one or more of hydroxymethyl (meth)acrylate, 2-hydroxyethyl (meth)acrylate, 2-hydroxypropyl (meth)acrylate, 2-hydroxybutyl (meth)acrylate, 4-hydroxybutyl (meth) acrylate, and 6-hydroxyhexyl (meth)acrylate.

The third structural unit derived from (meth)acrylamido sulfonic acid or a salt thereof may increase the possibility of lithium ion movement in the presence of the first structural unit and the second structural unit, thereby decreasing the membrane resistance of the separator.

By including a bulky functional group derived from (meth)acrylamido sulfonic acid or a salt thereof, the third structural unit may reinforce the heat resistance of the separator by an effect of increasing a glass transition temperature. For example, when the third structural unit includes a functional group derived from a salt of (meth)acrylamido sulfonic acid, because a metal (M) may move through the third structural unit due to a sulfonic acid functional group in which a metal (M) is substituted, an effect of decreasing membrane resistance may be achieved.

The third structural unit may be represented by at least one of Chemical Formula 5, Chemical Formula 6, and Chemical Formula 7 below, or a combination thereof.

Chemical Formula 5: Chemical Formula 6: Chemical Formula 7:

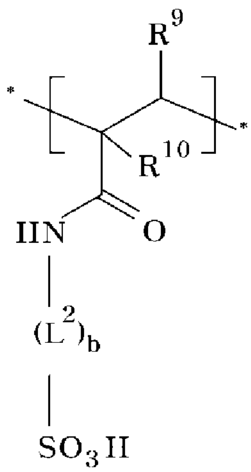

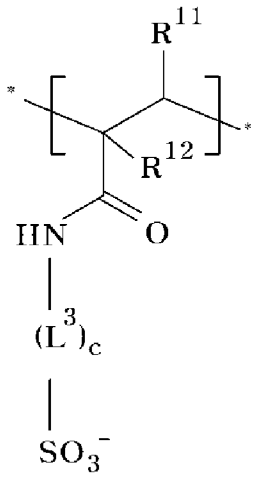

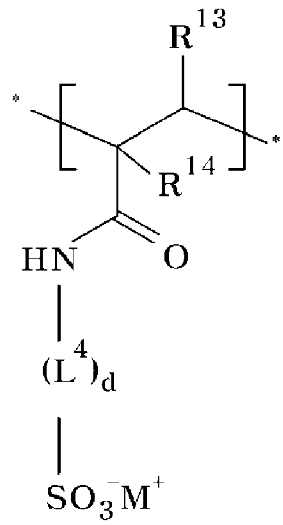

.

The third structural unit may include only one of a structural unit represented by Chemical Formula 5 above, a structural unit represented by Chemical Formula 6 above, and a structural unit represented by Chemical Formula 7 above, or may include two or more thereof. **In** one example, the third structural unit may include the structural unit represented by Chemical Formula 6 above, and in another example, the third structural unit may include the structural unit represented by Chemical Formula 6 above and the structural unit represented by Chemical Formula 7 above.

The third structural unit may be or include, for example, a structural unit derived from (meth)acrylamidoalkane sulfonic acid or salts thereof. Herein, the alkane may be or include at least one of a C1 to C20 alkane, a C1 to C10 alkane, or a C1 to C6 alkane, and the alkyl may be or include at least one of a C1 to C20 alkyl, a C1 to C10 alkyl, or a C1 to C6 alkyl. The salt refers to a salt composed of the above-described sulfonic acid and a desired ion. The ion may be or include, for example, an alkali metal ion, and in this case, the salt may be or include an alkali metal salt of sulfonic acid.

For example, the (meth)acrylamidoalkane sulfonic acid may be or include 2-(meth)acrylamido-2-methylpropane sulfonic acid.

The third structural unit may be included in an amount ranging from 20 mol% to 65 mol%, for example, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65 mol%, 30 mol% to 60 mol%, in the (meth)acryl-based binder. When the third structural unit is included within the above range, the (meth)acryl-based binder and the separator including the (meth)acryl-based binder can exhibit significantly low membrane resistance.

Descriptions of Chemical Formulas 1 to 7 above are as follows.

$R^1$ to $R^{14}$ may each independently be or include hydrogen or a C1 to C10 alkyl group. For example, $R^1$ to $R^7$ and $R^9$ to $R^{14}$ may each be or include hydrogen or a methyl group; and $R^8$ may be or include a methyl group.

$L^1$ to $L^4$ may each independently be or include a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group. For example, $L^1$ may be or include a methylene group or an ethylene group; and $L^2$ to $L^4$ may each independently be or include $*-C(CH_3)_2-CH_2-*$.

a, b, c, and d may be, each independently, an integer ranging from 0 to 2. For example, a, b, c, and d may all be equal to 1.

M may be or include an alkali metal, and the alkali metal may be or include at least one of lithium, sodium, potassium, rubidium, or cesium. For example, M may be or include lithium or sodium.

A representative example of the binder for a rechargeable lithium battery according to one example embodiment is illustrated by Chemical Formula 8 below:

Chemical Formula 8:

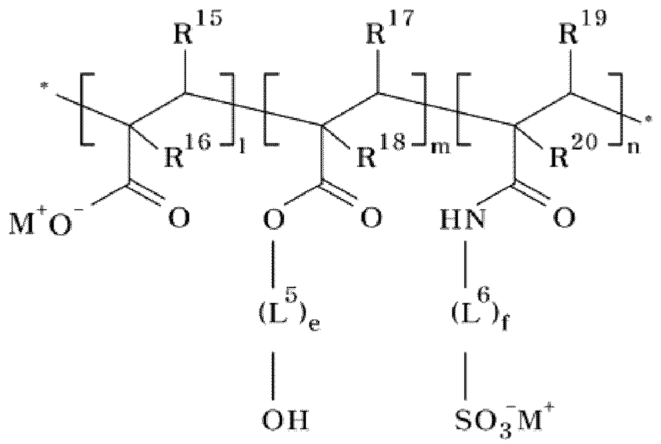

The description of Chemical Formula 8 above is as follows.

$R^{15}$ to $R^{20}$ may each independently be or include hydrogen or a C1 to C10 alkyl group. For example, $R^{15}$ to $R^{17}$, $R^{19}$, and $R^{20}$ may each be or include hydrogen or a methyl group; and $R^{18}$ may be or include a methyl group.

$L^5$ and $L^6$ may each independently be or include a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group. For example, $L^5$ may be or include a methylene group or an ethylene group; and $L^6$ may be or include *-$C(CH_3)_2$-$CH_2$-*.

M may be or include an alkali metal, and the alkali metal may be or include at least one of lithium, sodium, potassium, rubidium, or cesium. For example, M may be or include lithium or sodium.

1, m, and n may be molar ratios of each unit, and l+m+n may be 1. For example, $0.2 \leq l \leq 0.65$, $0.01 \leq m \leq 0.2$, and $0.2 \leq n \leq 0.65$, for example, $0.3 \leq l \leq 0.65$, $0.01 \leq m \leq 0.2$, and $0.2 \leq n \leq 0.65$; or $0.3 \leq l \leq 0.6$, $0.05 \leq m \leq 0.15$, and $0.3 \leq n \leq 0.6$.

The (meth)acryl-based binder may include an alkali metal. The alkali metal may be present in a cationic form and for example, may be or include at least one of lithium, sodium, potassium, rubidium, or cesium. For example, the alkali metal may be bonded with the (meth)acryl-based binder and present in the form of a salt. The alkali metal may assist in the synthesis of the (meth)acryl-based binder in an aqueous solvent, increase the adhesive strength of the coating layer, and increase the heat resistance, air permeability, oxidation resistance, and the like of the separator.

The alkali metal may be included in an amount in the range of 1 wt% to 40 wt% of the alkali metal and the (meth) acryl-based binder, for example, 1 wt% to 30 wt%, 1 wt% to 20 wt%, or 10 wt% to 20 wt%. For example, the (meth)acryl-based binder and the alkali metal may be included in an amount of a weight ratio ranging from 99:1 to 60:40, a weight ratio ranging from 99:1 to 70:30, for example, a weight ratio ranging from 99:1 to 80:20, or for example, a weight ratio ranging from 90:10 to 80:20.

The alkali metal may be included in an amount in the range of 0.1 mol% to 1.0 mol% with respect to the total content of the alkali metal and the (meth)acryl-based binder. When the alkali metal is included within the above range, the coating layer can have a desired or improved adhesive strength, and the separator including the coating layer can exhibit a desired or improved heat resistance, air permeability, and oxidation resistance.

The (meth)acryl-based heat-resistant binder may be in various forms, such as an alternating polymer in which the structural units are alternately distributed, a random polymer in which the structural units are randomly distributed, or a graft polymer in which some structural units are grafted.

A weight average molecular weight of the (meth)acryl-based binder may be in the range of 100,000 g/mol to 1,000,000 g/mol, 100,000 g/mol to 500,000 g/mol, 100,000 g/mol to 150,000 g/mol, 200,000 g/mol to 130,000 g/mol, or 300,000 g/mol to 900,000 g/mol. When the weight average molecular weight of the (meth)acryl-based binder satisfies the above range, a desired or improved adhesive strength and low resistance can be exhibited. The weight average molecular weight may be an average molecular weight measured using gel permeation chromatography and calibrated with polystyrene.

The (meth)acryl-based binder may be manufactured by a solution polymerization method.

According to one example embodiment, the (meth)acryl-based binder may be included in the coating layer of the separator in the form of a film.

The filler has a particle size D50 ranging from 50 nm to 250 nm and includes a substantially cubic filler. The filler having the above particle size D50 range and shape may increase the packing density in the coating layer, and may be advantageous in decreasing the thermal shrinkage rate due to the low specific surface area and low moisture content thereof. By including the filler, the separator may, despite including the coating layer having a thin thickness, provide a low

thermal shrinkage rate due to the high heat resistance thereof, increase the breakdown voltage (BDV) characteristics of the separator, and provide air permeability in the above-mentioned range.

According to one example embodiment, each of the MD shrinkage rate and the TD shrinkage rate may be 5% or less after the separator is left at 200 °C for 1 hour. Herein, a total thickness of the coating layer in the separator may range from 0.01 μm to 5 μm, 0.1 μm to 3 μm, or 0.1 μm to 1.5 μm.

FIG. 1 shows the SEM results of a coating layer including substantially cubic fillers having a particle size D50 that is 200 nm according to one example embodiment. Referring to FIG. 1, it can be seen that, by having a substantially cubic shape, the fillers can be densely included substantially without empty spaces therebetween in the coating layer. Thus, the substantially cubic fillers having a particle size D50 that is 200 nm can provide a high packing density in the coating layer. Here, "cubic shape" indicates that outer surfaces constituting the fillers each have a substantially rectangular shape, a substantially square shape, or a modified substantially cubic shape thereof as shown in FIG. 1.

On the other hand, FIG. 2 shows the SEM results of a coating layer including plate-shaped fillers having a particle size D50 that is 300 nm. Referring to FIG. 2, it can be seen that there are relatively more empty spaces between the fillers compared to the substantially cubic fillers having a particle size D50 that is 200 nm shown in FIG. 1, and the packing density of the fillers in the coating layer is low.

For example, the fillers may have a particle size D50 ranging from 100 nm to 250 nm, or 150 to 240 nm, for example 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, 200, 205, 210, 215, 220, 225, 230, 235, 240, 245, 250 nm.

According to one example embodiment, the substantially cubic filler having a particle size D50 that ranges from 50 nm to 250 nm may be included in an amount of 95 wt% or more, for example, an amount ranging from 95 wt% to 100 wt%, an amount ranging from 98 wt% to 100 wt%, or an amount of 100 wt%.

According to one example embodiment, the filler may have a specific surface area of 30 $m^2/g$ or less, for example, a specific surface area ranging from 5 $m^2/g$ to 16 $m^2/g$. Within the above range, the moisture content of the filler decreases, and thus it may be possible to provide a low thermal shrinkage rate even at a thin thickness. Here, "specific surface area" may indicate a Brunauer, Emmett and Teller (BET) specific surface area.

The filler may be or include, for example, an inorganic filler, an organic filler, an organic-inorganic composite filler, or combinations thereof. The inorganic filler may be or include a ceramic material that can increase heat resistance. The inorganic filler may include, for example, at least one of a metal oxide, a metalloid oxide, a metal fluoride, a metal hydroxide, or combinations thereof. The inorganic filler may include, for example, at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, or combinations thereof, but is not limited thereto. The organic filler may include at least one of an acrylic compound, an imide compound, an amide compound, or combinations thereof, but is not limited thereto. The organic filler may have a core-shell structure, but is not limited thereto. For example, the filler may be or include an inorganic filler such as, e.g., a ceramic such as cubic boehmite.

The filler may be included in a desired amount with respect to the binder, for example, the (meth)acryl-based binder. According to one example embodiment, the (meth)acryl-based binder and filler may be included in a mass ratio ((meth)acryl-based binder:filler) ranging from 1:10 to 1:50, for example, ranging from 1:20 to 1:30. Within the above range, a coating layer having desired or improved heat resistance and low air permeability can be obtained.

The filler may be included in an amount ranging from 50 wt% to 99 wt%, for example, 70 wt% to 99 wt%, for example, 75 wt% to 99 wt%, for example, 80 wt% to 99 wt%, for example, 85 wt% to 99 wt%, for example, 90 wt% to 99 wt%, or for example, 95 wt% to 99 wt% of a total amount of the coating layer. When the filler is included within the above range, the separator can exhibit desired or improved heat resistance, durability, oxidation resistance, and stability.

Due to the adhesive binder, the separator can maintain heat resistance and adhesive strength, and when included in a battery, the stability and service life of the battery can be improved, and battery resistance can also be improved.

The adhesive binder is or include an organic binder and includes a fluorine-based adhesive binder having a carboxylic acid group or a hydroxy group. The fluorine-based binder having a carboxylic acid group or a hydroxy group may increase the wet adhesive strength of the separator. The wet adhesive strength is described below.

According to one example embodiment, the fluorine-based adhesive binder having a carboxylic acid group or a hydroxy group may be or include a poly(vinylidene fluoride) (PVDF)-based binder having a carboxylic acid group or a hydroxy group.

For example, the PVDF-based binder includes at least one of a structural unit derived from vinylidene fluoride, and a structural unit derived from a monomer having at least one carboxylic acid group or hydroxy group. The structural unit derived from the monomer having at least one carboxylic acid group or hydroxy group may provide improved wet adhesive strength, durability, and air permeability. The monomer having at least one carboxylic acid group or hydroxy group may be or include one or more of (meth)acrylic acid, itaconic acid or a derivative thereof, maleic acid or a derivative thereof, and a hydroxyalkane allyl ether.

The PVDF-based binder may further include a structural unit derived from a monomer copolymerizable with vinylidene fluoride. The copolymerizable monomer may be or include one or more of trichloroethylene, chlorotrifluoroethylene, trifluoroethylene, hexafluoropropylene, ethylene tetrafluoride, and ethylene monomers.

According to one example embodiment, the PVDF-based binder is or includes at least one of a copolymer of vinylidene fluoride, a monomer having a carboxylic acid group or a hydroxy group, and hexafluoropropylene, and may include at least one of a structural unit derived from vinylidene fluoride, a structural unit derived from the monomer having a carboxylic acid group or a hydroxy group, and a structural unit derived from hexafluoropropylene.

The PVDF-based binder having a carboxylic acid group or a hydroxy group may have a glass transition temperature (Tg) value ranging from -70 °C to -20 °C, and may have a weight average molecular weight ranging from 200,000 g/mol to 3,000,000 g/mol, 200,000 g/mol to 2,000,000 g/mol, or 300,000 g/mol to 1,500,000 g/mol. When the glass transition temperature (Tg) value and the weight average molecular weight are within the above ranges, the separator can have a desired or improved adhesive strength.

According to one example embodiment, the PVDF-based compound may include vinylidene fluoride repeating units in an amount ranging from 80 mol% to 99 mol%, hexafluoropropylene repeating units in an amount ranging from 0.5 mol% to 10 mol%, and repeating units derived from the monomer having a carboxylic acid group or a hydroxy group in an amount ranging from 0.5 mol% to 10 mol%.

The PVDF-based binder may be in various forms, such as or including an alternating polymer in which the repeating units are alternately distributed, a random polymer in which the repeating units are randomly distributed, or a graft polymer in which some repeating units are grafted. Also, the PVDF-based binder may be or include a linear polymer, a branched polymer, or a mixed form thereof.

In the PVDF-based binder, the vinylidene fluoride repeating units may be included in an amount ranging from 90 mol% to 99.5 mol%, 93 mol% to 99 mol%, or 95 mol% to 99 mol%, and the hexafluoropropylene repeating units may be included in an amount of 0 mol% or more to 10 mol% or less, for example, included in the range of 0.5 mol% to 10 mol%, 1 mol% to 10 mol%, 1 mol% to 9 mol%, 2 mol% to 7 mol%, or 4 mol% to 6 mol%. Within the above range, the PVDF-based compound may exhibit chemical stability and exhibit a desired or improved adhesion while exhibiting a desired or improved solubility in low boiling point solvents. Accordingly, an adhesive layer can be formed using a low boiling point solvent without any additional process, and a decrease in air permeability that may inevitably occur due to the use of high boiling point solvents can be reduced or prevented. The low boiling point solvent may be, for example, a solvent having a boiling point of 80 °C or lower, and for example, may be or include at least one of acetone, methyl ethyl ketone, ethyl isobutyl ketone, tetrahydrofuran, dimethyl formaldehyde, cyclohexane, or a mixed solvent thereof, but is not limited thereto.

The crystallinity of the PVDF-based binder having a carboxylic acid group or a hydroxy group may range from 40% to 65%, for example, 45% to 60%, or 50% to 55%. In this case, the binder can exhibit a desired or improved adhesive strength. The crystallinity of the PVDF-based binder may be higher than the crystallinity of a PVDF-based binder, which is described below.

The melting point of the PVDF-based binder having a carboxylic acid group or a hydroxy group may be 150 °C or higher, for example, in the range of 150 °C to 200 °C.

The adhesive binder is or includes an organic binder, and may further include a fluorine-based binder not having a carboxylic acid group and a hydroxy group. The fluorine-based binder not having a carboxylic acid group and a hydroxy group may increase the dry adhesive strength of the adhesive layer. The dry adhesive strength is described below.

The fluorine-based binder not having a carboxylic acid group and a hydroxy group may include repeating units derived from vinylidene fluoride and a copolymerizable monomer. The copolymerizable monomer may be or include one or more of trichloroethylene, chlorotrifluoroethylene, trifluoroethylene, hexafluoropropylene, ethylene tetrafluoride, and ethylene monomers.

The fluorine-based binder not having a carboxylic acid group and a hydroxy group may have various forms, such as an alternating polymer, a random polymer, or a graft polymer. The fluorine-based binder not having a carboxylic acid group is or includes a linear polymer, a branched polymer, or a mixed form thereof, and may be or include a polymer having more branched chains than the fluorine-based binder having a carboxylic acid group.

The fluorine-based binder not having a carboxylic acid group and a hydroxy group may include a vinylidene fluoride repeating unit and a hexafluoropropylene repeating unit.

The vinylidene fluoride repeating unit may be included in an amount ranging from 90 mol% to 99.5 mol%, 93 mol% to 99 mol%, or 95 mol% to 99 mol% with respect to the binder. When the vinylidene fluoride repeating unit is included within the above range, the binder can secure desired or improved adhesive strength, electrolyte impregnability, and the like.

The hexafluoropropylene repeating unit may be included in an amount of more than 0 mol% to 10 mol% or less, for example, included in the range of 0.5 mol% to 10 mol%, 1 mol% to 9 mol%, 2 mol% to 8 mol%, 3 mol% to 7 mol%, or 4 mol% to 6 mol% with respect to the binder. When the hexafluoropropylene repeating unit is included within the above range, the binder may exhibit chemical stability and exhibit a desired or improved adhesion while exhibiting desired or improved solubility in low boiling point solvents. Accordingly, an adhesive layer can be formed using a low boiling point solvent substantially without any additional process, and a decrease in air permeability that may inevitably occur due to use of high boiling point solvents can be reduced or prevented.

The fluorine-based binder not having a carboxylic acid group and a hydroxy group may have a glass transition

temperature (Tg) value ranging from -70 °C to 20 °C and may have a weight average molecular weight ranging from 800,000 g/mol to 2,000,000 g/mol or 800,000 g/mol to 1,900,000 g/mol. When the fluorine-based binder not having a carboxylic acid group and a hydroxy group has a weight average molecular weight in the above range, the adhesive layer including the fluorine-based binder can exhibit improved wet adhesive strength and dry adhesive strength. The weight average molecular weight may be an average molecular weight measured using gel permeation chromatography and calibrated with polystyrene.

The crystallinity of the binder ranges from 35% to 45%, for example, 35% to 40%. When the binder has crystallinity in the above range, an adhesive layer including the binder exhibits a desired or improved dry adhesive strength. The crystallinity of the binder may be lower than the crystallinity of the fluorine-based binder having a hydroxy group or a carboxylic acid group.

The melting point of the PVDF-based binder not having a carboxylic acid group and a hydroxy group may be 150 °C or higher, for example, in the range of 150 °C to 200 °C.

Both types of binders may be prepared by various known methods such as, e.g., emulsion polymerization, suspension polymerization, bulk polymerization, or solution polymerization. For example, both types of binders may be prepared by emulsion polymerization.

The wet adhesive strength and dry adhesive strength are measured using the following method: a battery is manufactured using the following method, and the wet adhesive strength and dry adhesive strength are measured.

**Manufacture of battery**

Manufacture of negative electrode:

A negative electrode active material slurry was prepared by mixing 97 wt% graphite particles having an average particle size of 25 μm, 1.5 wt% styrene-butadiene rubber (SBR) binder, and 1.5 wt% carboxymethyl cellulose (CMC), and then adding distilled water and stirring for 60 minutes using a mechanical stirrer. The slurry was applied on a 10 μm-thick copper current collector using a doctor blade, dried for 0.5 hours in a 100 °C hot air dryer, dried again for 4 hours under vacuum and 120 °C conditions, and roll-pressed to manufacture a negative electrode.

Manufacture of positive electrode:

A positive electrode active material slurry was prepared by mixing 97 wt% $LiCoO_2$, 1.5 wt% carbon black powder as a conductive additive, and 1.5 wt% PVDF, adding the mixture to an N-methyl-2-pyrrolidone solvent, and then stirring the mixture for 30 minutes using a mechanical stirrer. The slurry was applied on a 20 μm-thick aluminum current collector using a doctor blade, dried for 0.5 hours in a 100 °C hot air dryer, dried again for 4 hours under vacuum and 120 °C conditions, and roll-pressed to manufacture a positive electrode.

Electrode assembly jelly roll

An electrode assembly jelly roll was prepared by interposing a separator between the positive electrode and the negative electrode manufactured above, and winding the separator. The jelly roll was inserted into a pouch, an electrolyte was injected thereinto, and the pouch was vacuum-sealed. As the electrolyte, a mixed solvent of ethylene carbonate (EC), ethyl methyl carbonate (EMC), and dimethyl carbonate (DEC) having a volume ratio of 3:5:2 in which 1.3M $LiPF_6$ was dissolved was mixed.

A rechargeable lithium battery was manufactured by pressing the jelly roll inserted into the pouch at a temperature of 80 °C for 3 minutes while applying a pressure of 11.7 $kgf/cm^2$.

Wet adhesive strength:

The wet adhesive strength is an electrode adhesive strength (bending strength) of a separator that is measured using the 3-point bending method in a lithium battery obtained by impregnating a battery assembly including a positive electrode, a negative electrode, and a separator in an electrolyte, and pressing the battery assembly under conditions of a pressure of 10 to 20 $kgf/cm^2$, a temperature of 70 to 90 °C, and a time of 1 to 5 minutes.

As the electrolyte, a 3/5/2 (volume ratio) mixed solvent of EC/EMC/DEC in which 1.3M $LiPF_6$ was dissolved was mixed. The battery assembly in the state of a jelly roll inserted into a pouch was pressed for 180 seconds with a pressure of 11.7 $kgf/cm^2$ at a temperature of 80 °C.

Dry adhesive strength:

The dry adhesive strength is an electrode adhesive strength(bending strength) of a separator that is measured using the 3-point bending method in a lithium battery obtained by pressing a battery assembly including a positive electrode, a negative electrode, and a separator under conditions of a pressure of 10 kgf/cm$^2$to 20 kgf/cm$^2$, a temperature of 70 °C to 90 °C, and a time of 5 seconds to 20 seconds.

A battery assembly in the state of a jelly roll was prepared by interposing the separator between the positive electrode and the negative electrode manufactured as above and then winding the separator. The battery assembly was inserted into a pouch, an electrolyte was injected thereinto, and the pouch was vacuum-sealed.

The battery assembly inserted into the pouch was pressed for 10 seconds with a pressure of 11.7 kgf/cm$^2$ at a temperature of 85 °C, and the dry adhesive strength was evaluated using an electrode adhesive strength (bending strength) of the separator using the 3-point bending method.

As the electrode adhesive strength (bending strength) of the separator, the adhesive strength between an active material layer of the positive electrode and the separator was measured using the 3-point bending (INSTRON) method. A pouch cell that underwent 0.1 C charging/discharging was pressed at a speed of 5 mm/min using a jig, and a MAX value (N, MPa) from the zero point to 5 mm bending was measured. The evaluation conditions of the 3-point bending (INSTRON) method are as follows.

Lower span width: 27 mm, Lower span size: 5 mm
Upper jig size: 5 mm, Load cell: 1000 N

The adhesive binder may be included in an amount ranging from 1 wt% to 20 wt%, for example 5 wt% to 20 wt%, or for example, 5 wt% to 15 wt%, of a total amount of the coating layer. Within the above range, because adhesive strength to an electrode is achieved, and battery resistance does not increase, there may be no limitation in capacity implementation.

The coating layer may have a total thickness ranging from 0.01 μm to 20 μm, and may have a thickness ranging from 0.01 μm to 5 μm, 0.1 μm to 3 μm, or 0.1 μm to 1.5 μm.

According to one example embodiment, the total thickness of the heat-resistant layer may range from 0.8 μm to 2.5 μm, for example, 0.9 μm to 2.2 μm or 1.0 μm to 2.0 μm.

According to one example embodiment, the total thickness of the adhesive layer may range from 0.5 μm to 2.0 μm, for example, 0.5 μm to 1.5 μm.

A ratio of a thickness of the coating layer to a thickness of the porous base may range from 0.05 to 0.5, for example, 0.05 to 0.4, 0.05 to 0.3, or 0.1 to 0.2. Within the above range, the separator can exhibit desired or improved air permeability, heat resistance, adhesive strength, and the like. Herein, "thickness of the coating layer" refers to a thickness of one coating layer when the coating layer is formed on only one surface of the porous base, and refers to the total thickness of two coating layers when the coating layer is formed on both surfaces of the porous base.

**Porous base**

The porous base may be or include a base having multiple pores and commonly included in electrochemical devices. The porous base may be or include a polymer membrane formed of or including any one polymer such as or including at least one of a polyolefin such as polyethylene or polypropylene, a polyester such as polyethylene terephthalate or polybutylene terephthalate, polyacetal, polyamide, polyimide, polycarbonate, polyether ether ketone, polyaryl ether ketone, polyetherimide, polyamideimide, polybenzimidazole, polyethersulfone, polyphenylene oxide, a cyclic olefin copolymer, polyphenylene sulfide, polyethylene naphthalate, glass fiber, Teflon, and polytetrafluoroethylene, or a copolymer or mixture of two or more thereof.

The porous base may be or include, for example, a polyolefin-based base including a polyolefin, and the polyolefin-based base may have a desired or improved shutdown function, thereby contributing to increasing the safety of the battery. The polyolefin-based base may be or include, for example, at least one of a polyethylene single film, a polypropylene single film, a polyethylene/polypropylene double film, a polypropylene/polyethylene/polypropylene triple film, and a polyethylene/polypropylene/polyethylene triple film. In addition, the polyolefin-based resin may include a non-olefin resin in addition to an olefin resin, or include a copolymer of olefin and non-olefin monomers.

The porous base may have a thickness ranging from 1 μm to 40 μm, for example, 1 μm to 30 μm, 1 μm to 20 μm, or 5 μm to 15 μm.

The separator for a rechargeable lithium battery according to one example embodiment may exhibit a desired or improved air permeability, and may have an air permeability value of, for example, less than 200 sec/100 cc, for example, 190 sec/100 cc or less, or 180 sec/100 cc or less. For example, the separator may have an air permeability value of less than 40 sec/100 cc·1 μm per unit thickness, for example, 30 sec/100 cc·1 μm or less, or 25 sec/100 cc·1 μm or less. Herein, the air permeability refers to the time (seconds) it takes for 100 cc of air to pass through the unit thickness of the separator.

The air permeability per unit thickness may be obtained by measuring the air permeability for the total thickness of the separator and dividing the air permeability by the thickness. The air permeability may be obtained by measuring the time (seconds) it takes for 100 cc of air to pass through the separator using an air permeability measurement device (EG01-55-1MR, Asahi Seiko Co., Ltd.).

The separator for a rechargeable battery according to one example embodiment may be formed by applying a composition for forming a heat-resistant layer on one surface, or on both surfaces, of a porous base, drying the composition to form a heat-resistant layer, applying an adhesive binder on one surface of the heat-resistant layer, and drying the adhesive binder to form an adhesive layer. The drying may be performed using conventional methods known to those skilled in the art.

FIG. 3 is a cross-sectional view showing a separator for a rechargeable lithium battery, according to one example embodiment.

Referring to FIG. 3, the example separator for a rechargeable lithium battery includes a porous base 1 and a coating layer 2 on both surfaces of the porous base 1. The coating layer 2 may include a heat-resistant layer 5 including a (meth)acryl-based binder 4 and a filler 3, and an adhesive layer 7 on the heat-resistant layer 5 and including an adhesive binder 6.

Rechargeable lithium battery

According to one example embodiment, the rechargeable lithium battery includes the separator for a rechargeable lithium battery, a positive electrode, and a negative electrode.

The separator for a rechargeable lithium battery refers to the description described above. The separator for a rechargeable lithium battery may be between the positive electrode and the negative electrode.

Positive electrode

A positive electrode for a rechargeable lithium battery may include a current collector, and a positive electrode active material layer on the current collector. The positive electrode active material layer may include a positive electrode active material, and may further include a binder and/or a conductive material.

For example, the positive electrode may further include an additive that can be configured as a sacrificial positive electrode.

Positive electrode active material

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof, may be used.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. $Li_aA_{1-b}X_bO_{2-c}D_c$ ($0.90 \leq a \leq 1.8$, $0 \leq b \leq 0.5$, and $0 \leq c \leq 0.05$); $Li_aMn_{2-b}X_bO_{4-c}D_c$ ($0.90 \leq a \leq 1.8$, $0 \leq b \leq 0.5$, and $0 \leq c \leq 0.05$); $Li_{aN}i_{1-b-c}Co_bX_cO_{2-\alpha}D_\alpha$ ($0.90 \leq a \leq 1.8$, $0 \leq b \leq 0.5$, $0 \leq c \leq 0.5$, and $0<\alpha<2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, and $0<\alpha<2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ ($0.90 \leq a \leq 1.8$ and $0.001 \leq b \leq 0.1$); $Li_aCoG_dO_2$ ($0.90 \leq a \leq 1.8$ and $0.001 \leq b \leq 0.1$); $Li_aMn_{1-b}G_bO_2$ ($0.90 \leq a \leq 1.8$ and $0.001 \leq b \leq 0.1$); $Li_aMn_2G_bO_4$ ($0.90 \leq a \leq 1.8$ and $0.001 \leq b \leq 0.1$); $Li_aMn_{1-gGg}PO_4$ ($0.90 \leq a \leq 1.8$ and $0 \leq g \leq 0.5$); $Li_{(3-f)}Fe_2(PO_4)_3$ ($0 \leq f \leq 2$); or $Li_aFePO_4$ ($0.90 \leq a \leq 1.8$).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

The positive electrode active material may be or include, for example, a high nickel-based positive electrode active material having a nickel content of greater than or equal to 80 mol%, greater than or equal to 85 mol%, greater than or equal to 90 mol%, greater than or equal to 91 mol%, or greater than or equal to 94 mol% and less than or equal to 99 mol% based on 100 mol% of the metal excluding lithium in the lithium transition metal composite oxide. The high-nickel-based positive electrode active material may be capable of exhibiting high capacity, and can be applied to a high-capacity, high-density rechargeable lithium battery.

An amount of the positive electrode active material may be in a range of 90 wt% to 99.5 wt% based on 100 wt% of the positive electrode active material layer. Amounts of the binder and the conductive material may be in a range of 0.5 wt%

to 5 wt%, respectively, based on 100 wt% of the positive electrode active material layer.

The binder is configured to attach the positive electrode active material particles to each other, and to attach the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be included to impart conductivity (e.g., electrical conductivity) to the electrode. Any material that does not cause chemical change (e.g., that does not cause an undesirable chemical change in the rechargeable lithium battery), and that conducts electrons, can be included in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material including at least one of copper, nickel, aluminum, silver, and the like, in a form of a metal powder or a metal fiber; a conductive polymer such as a polyphenylene derivative; or a mixture thereof.

Al may be included as the current collector, but is not limited thereto.

Negative electrode

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

For example, the negative electrode active material layer may include 90 wt% to 99 wt% of the negative electrode active material, 0.5 wt% to 5 wt% of the binder, and 0 wt% to 5 wt% of the conductive material.

Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be or include graphite such as non-shaped, substantially sheet-shaped, flake-shaped, substantially sphere-shaped, or fiber-shaped, natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include at least one of a Si-based negative electrode active material or a Sn-based negative electrode active material. The Si-based negative electrode active material may include at least one of silicon, a silicon-carbon composite, $SiOx$ ($0 < x < 2$), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in the form of silicon particles, and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be included in combination with a carbon-based negative electrode active material.

The binder may be configured to attach the negative electrode active material particles to each other, and to attach the negative electrode active material to the current collector. The binder may include a non-aqueous binder, an aqueous binder, a dry binder, or a combination thereof.

The non-aqueous binder may include at least one of polyvinyl chloride, carboxylated polyvinyl chloride, polyvinyl

fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is included as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may be included to impart conductivity (e.g., electrical conductivity) to the electrode. Any material that does not cause chemical change (e.g., that does not cause an undesirable chemical change in the rechargeable lithium battery), and that conducts electrons, can be included in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in the form of a metal powder or a metal fiber; a conductive polymer such as a polyphenylene derivative; or a mixture thereof.

The negative current collector may include at least one of a copper foil, a nickel foil, a stainless steel foil, a titanium foil, a nickel foam, a copper foam, a polymer substrate coated with a conductive metal, or a combination thereof.

The rechargeable lithium battery may further include an electrolyte solution.

<u>Electrolyte Solution</u>

The electrolyte solution for a rechargeable lithium battery may include a non-aqueous organic solvent and a lithium salt.

The non-aqueous organic solvent may be configured as a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like and the aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be included alone or in combination of two or more solvents.

For example, when using a carbonate-based solvent, a cyclic carbonate and a chain carbonate may be mixed, and the cyclic carbonate and the chain carbonate may be mixed in a volume ratio in a range of 1:1 to 1:9.

The lithium salt dissolved in the organic solvent is configured to supply lithium ions in a battery, to enable a basic operation of a rechargeable lithium battery, and to improve transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

The rechargeable lithium battery may be classified into cylindrical, prismatic, pouch, or coin-type batteries, and the like depending on a shape thereof.

FIGS. 4 to 7 are schematic views illustrating a rechargeable lithium battery according to example embodiments. FIG. 4 illustrates a cylindrical battery, FIG. 5 illustrates a prismatic battery, and FIGS. 6 and 7 illustrate pouch-type batteries. Referring to FIGS. 4 to 7, the rechargeable lithium battery 100 may include an electrode assembly 40 including a

separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as illustrated in FIG. 4. In FIG. 5, the rechargeable lithium battery 100 may include a positive lead tab 11, a positive terminal 12, a negative lead tab 21, and a negative terminal 22. As shown in FIGS. 6 and 7, the rechargeable lithium battery 100 may include an electrode tab 70 illustrated in FIG. 7, or, for example, a positive electrode tab 71 and a negative electrode tab 72 illustrated in FIG. 6, the electrode tabs 70/71/72 forming an electrical path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

Hereinafter, examples and comparative examples of the present disclosure are described. However, the following examples are merely example embodiments of the present disclosure, and the present disclosure is not limited to the following examples.

**Preparation Example 1**

In a 3 L four-necked separable flask provided with a stirrer, a thermometer, and a cooling tube, a process of adding 1249.72 g of distilled water, a 20% lithium hydroxide aqueous solution (203.69 g, 1.05 equivalents with respect to the total amount of acrylic acid and 2-acrylamido-2-methylpropanesulfonic acid), acrylic acid (AA, 0.40 mol), 2-hydroxyethyl methacrylate (HEMA, 0.10 mol), 2-acrylamido-2-methylpropanesulfonic acid (AMPS, 0.5 mol), and ammonium persulfate (0.001 mol), then reducing an internal pressure to 10 cmmHg using a diaphragm pump, and returning the internal pressure to a normal pressure using nitrogen was repeated three times. The reaction was carried out for 12 hours while controlling the heating so that the temperature of the reaction solution was stable between 65 °C and 70 °C. After cooling to room temperature, a non-volatile (NV) component in 10 mL of the reaction solution was measured and the measurement result was 9.8 wt% (theoretical value: 10%). Also, in a poly(acrylic acid-co-2-hydroxyethylmethacrylate-co-2-acrylamido-2-methylpropanesulfonic acid) lithium salt obtained here, a molar ratio of a first structural unit derived from acrylic acid lithium salt, a second structural unit derived from 2-hydroxyethylmethacrylate, and a third structural unit derived from 2-acrylamido-2-methylpropanesulfonic acid lithium salt was 40:10:50.

**Preparation Example 2**

A poly(acrylic acid-co-2-hydroxyethylmethacrylate-co-2-acrylamido-2-methylpropanesulfonic acid) lithium salt was prepared by changing the content of each monomer in Preparation Example 1. A molar ratio of acrylic acid lithium salt, 2-hydroxyethylmethacrylate, and 2-acrylamido-2-methylpropanesulfonic acid lithium salt was 30:10:60. A non-volatile component in 10 mL of the reaction solution (reaction product) was measured and the measurement result was 9.0 wt% (theoretical value: 10%).

**Preparation Example 3**

An acryl-based binder was prepared in the same manner as Preparation Example 1, with a difference that acrylic acid and 2-hydroxyethyl methacrylate (HEMA) were used, and 2-acrylamido-2-methylpropanesulfonic acid was not used. A molar ratio of acrylic acid lithium salt and 2-hydroxyethylmethacrylate was 42:58. A non-volatile component in the reaction solution was 9.0 wt% (theoretical value: 10%).

**Preparation Example 4**

An acryl-based binder was prepared in the same manner as Preparation Example 1, with a difference that acrylic acid and 2-acrylamido-2-methylpropanesulfonic acid were used, and 2-hydroxyethyl methacrylate was not used. A molar ratio of acrylic acid lithium salt and 2-acrylamido-2-methylpropanesulfonic acid lithium salt was 74:26. A non-volatile component in the reaction solution was 9.0 wt% (theoretical value: 10%).

**Preparation Example 5**

An acryl-based binder was prepared in the same manner as Preparation Example 1, with a difference that 2-hydroxyethyl methacrylate and 2-acrylamido-2-methylpropanesulfonic acid were used, and acrylic acid was not used. A molar ratio of 2-hydroxyethyl methacrylate and 2-acrylamido-2-methylpropanesulfonic acid lithium salt was 74:26. A non-volatile component in the reaction solution was 9.0 wt% (theoretical value: 10%).

Table 1 below shows the molar ratio of each monomer in the (meth)acryl-based binders prepared in Preparation

Examples 1 to 5.

Table 1:

| | Monomer molar ratio | | |
|---|---|---|---|
| | AA | HEMA | AMPS |
| **Preparation Example 1** | 40 | 10 | 50 |
| **Preparation Example 2** | 30 | 10 | 60 |
| **Preparation Example 3** | 42 | 58 | 0 |
| **Preparation Example 4** | 74 | 0 | 26 |
| **Preparation Example 5** | 0 | 74 | 26 |

**Example 1**

A dispersion was prepared by mixing a methacryl-based binder (10 wt% in distilled water) prepared in Preparation Example 1 and boehmite (particle size D50: 200 nm, cubic-shaped, BG200 of Eston Co., Ltd.) as a filler at a mass ratio (1:20) of methacryl-based binder:filler=1 part by weight: 20 parts by weight based on solid content, adding the mixture to a water solvent, then milling the mixture for 30 minutes at 25 °C using a bead mill, and dispersing the mixture. A composition for forming a heat-resistant layer was prepared by adding water to the dispersion so that the total solid content became 20 wt%.

A heat-resistant layer was formed by coating both surfaces of a polyethylene-based film (thickness: 5.5 μm, CZMZ Company, air permeability: 110 sec/100 cc, and puncture strength: 360 kgf) as a porous base with the composition for forming a heat-resistant layer at a total thickness of 1 μm using a die coating method, and drying the composition in an oven at 70 °C for 10 minutes.

A first binder solution was prepared by adding, as an adhesive binder, 8 wt% of PVDF-hexafluoropropylene-based binder 75130 having a carboxylic acid group (weight average molecular weight of 1,300,000 g/mol, molar ratio of PVDF:hexafluoropropylene = 98:2, acrylic acid included as a monomer, glass transition temperature of -30 °C, melting point of 154 °C, and crystallinity of 53%) to acetone and stirring for 3 hours at 40 °C using a stirrer. A second binder solution was prepared by adding, as an adhesive binder, 8 wt% of PVDF-hexafluoropropylene-based binder LBG not having a carboxylic acid group (weight average molecular weight of 1,300,000 g/mol, molar ratio of PVDF :hexafluoropropylene = 98:2, acrylic acid not included as a monomer, glass transition temperature of -30 °C, melting point of 151 °C, and crystallinity of 40%) to acetone and stirring for 3 hours at 40 °C using a stirrer. A composition for an adhesive layer was prepared by mixing the first binder solution and the second binder solution in a weight ratio of first binder: second binder = 5:5.

Both surfaces of the heat-resistant layer were directly coated with the prepared composition for an adhesive layer at a speed of 80 mm/min, and then dried at 60 °C in the presence of an absolute water vapor amount (average value) of 14 $g/m^3$ to form an adhesive layer having a total thickness of 0.7 μm, thereby manufacturing a separator for a rechargeable lithium battery.

**Examples 2 to 5**

A separator for a rechargeable lithium battery was manufactured in the same manner as in Example 1, with a difference that in Example 1, as shown in Table 2 below, boehmite was included as a filler, but the D50 was changed, the type of methacryl-based binder was changed, or the thickness of the heat-resistant layer was changed.

**Comparative Examples 1 to 6**

A separator for a rechargeable lithium battery was manufactured in the same manner as in Example 1, with a difference that in Example 1, as shown in Table 2 below, boehmite was included as a filler, but the D50 was changed, the type of methacryl-based binder was changed, or the thickness of the heat-resistant layer was changed.

In Comparative Example 4, boehmite (particle size D50: 300 nm, cubic-shaped) was included as a filler. In Comparative Example 5, boehmite (particle size D50: 30 nm, cubic-shaped) was included as a filler. In Comparative Example 6, an acrylate-based adhesive binder was included as an adhesive binder.

**Manufacture of battery**

Manufacture of negative electrode:

A negative electrode active material slurry was prepared by mixing 97 wt% graphite particles having an average particle size of 25 μm as a negative electrode active material, 1.5 wt% SBR(styrene butadiene rubber) binder, and 1.5 wt% CMC(carboxymethylcellulose), and then adding distilled water and stirring for 60 minutes using a mechanical stirrer. The slurry was applied on a 10 μm-thick copper current collector using a doctor blade, dried for 0.5 hours in a 100 °C hot air dryer, dried again for 4 hours under vacuum and 120 °C conditions, and roll-pressed to manufacture a negative electrode.

Manufacture of positive electrode:

A positive electrode active material slurry was prepared by mixing 97 wt% $LiCoO_2$ as a positive electrode active material 1.5 wt% carbon black powder as a conductive additive, and 1.5 wt% PVDF, adding the mixture to an N-methyl-2-pyrrolidone solvent, and then stirring the mixture for 30 minutes using a mechanical stirrer. The slurry was applied on a 20 μm-thick aluminum current collector using a doctor blade, dried for 0.5 hours in a 100 °C hot air dryer, dried again for 4 hours under vacuum and 120 °C conditions, and roll-pressed to manufacture a positive electrode.

Electrode assembly jelly roll:

An electrode assembly jelly roll was prepared by interposing the separators obtained according to Examples and Comparative Examples between the positive electrode and the negative electrode manufactured as above, and then winding the separators. The jelly roll was inserted into a pouch, an electrolyte was injected thereinto, and the pouch was vacuum-sealed. As the electrolyte, a mixed solvent of EC, EMC, and DEC having a volume ratio of 3:5:2 in which 1.3M $LiPF_6$ was dissolved was used. A rechargeable lithium battery was manufactured by pressing the jelly roll inserted into the pouch at a temperature of 80 °C for 3 minutes while applying a pressure of 11.7 kgf/$cm^2$.

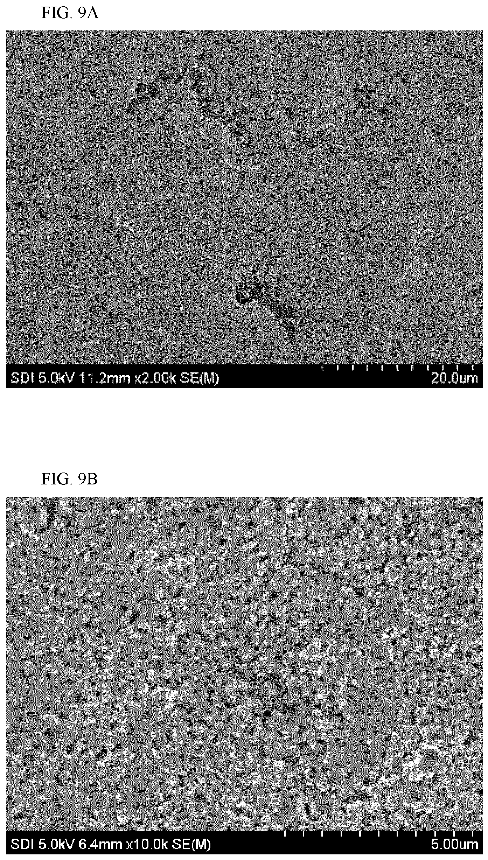

FIGS. 8A and 8B show the SEM results of the coating layer in the separator of Example 1, FIG. 8A is a result of 10x magnification, and FIG. 8B is a result of 20x magnification. FIGS. 9A and 9B show the SEM results of the coating layer in the separator of Comparative Example 4, FIG. 9A is a result of 10x magnification, and FIG. 9B is a result of 20x magnification. It can be seen that there are uncoated portions in FIGS. 9A and 9B, whereas there are no uncoated portions in FIGS. 8A and 8B.

**Thermal shrinkage rate after leaving at 200 °C for 1 hour (units:** %)

Samples were prepared by cutting the separators for a rechargeable lithium battery of Examples and Comparative Examples to a size of 8 cm×8 cm. A shrinkage rate in each of a mechanical direction (MD) and a transverse direction (TD) was calculated by drawing a square with a size of 5 cm×5 cm on surfaces of the samples, then putting the samples between pieces of paper or alumina powder, leaving the samples in an oven at 200 °C for 1 hour, taking the samples out, and then measuring the side dimensions of the drawn square. The shrinkage rate was calculated according to Equation 1 below.

Equation 1:

$$\text{Shrinkage rate} = (L0 - L1) / L0 \times 100.$$

L0 denotes an initial length of the separator, and L1 denotes a length of the separator after being left at 200 °C for 1 hour.

**Coating density (units: g/cm$^3$)**

The thickness (a) and unit weight (b) of the porous base before coating the porous base with the composition for forming a heat-resistant layer were measured. The porous base was coated with the composition for forming a heat-resistant layer and the adhesive binder, and dried in an oven at 70 °C for 10 minutes, and then the total thickness (c) and unit weight (d) were measured, and the coating thickness (e) and coating weight (f) were calculated. The coating density was calculated by dividing the coating weight by the coating thickness.

Coating thickness (e) = c-a
Coating weight (f) = d-b
Coating density = f/e

**Air permeability (units: sec/100 cc)**

The air permeability was measured by measuring the time (units: seconds) it takes for 100 cc of air to pass through the separator using a measuring device (EG01-55-1MR, Asahi Seiko).

Air permeability measuring device setting conditions:
Measuring pressure: 0.5 kg/$cm^2$, cylinder pressure: 2.5 kg/ $cm^2$, set time: 10 seconds

**Positive electrode adhesive strength (units: gf/mm)**

Each of the separators of Examples and Comparative Examples were cut to a width of 25 mm and a length of 80 mm, and a polyethylene nonwoven fabric was also cut to the same size. The manufactured electrode was cut to a width of 30 mm and a length of 80 mm. A unit cell was manufactured by disposing the electrode on one surface of each of the separators, and disposing the polyethylene nonwoven fabric and an electrode on the other surface of each of the separators.

An electrolyte (a 3/5/2 (volume ratio) mixed solvent of EC/EMC/DEC in which 1.3M $LiPF_6$ was dissolved) was injected into a pouch having a size of 10 cm×10 cm, and the separator and the positive electrode were immersed for 12 hours, taken out, and then bonded under a condition of 300 kgf/cm at 80 °C for 1 hour. After the separator and the positive electrode were taken out of the pouch, the positive electrode and the separator were unfolded to 180°, and the force required to peel the positive electrode off of the separator was measured using a tension measuring device (HT400, Tinius Olsen Co., Ltd.).

**Membrane resistance (units: Ω)**

Membrane resistance was evaluated using electrochemical impedance spectroscopy (EIS) resistance. The separators manufactured in Examples and Comparative Examples were impregnated with an electrolyte (a mixed solvent of ethylene carbonate, ethyl methyl carbonate, and dimethyl carbonate (a volume ratio of 2/1/7) in which 1.5 M $LiPF_6$ was dissolved), fitted to a lead tab-attached aluminum foil electrode, and sealed in an aluminum pack to manufacture a test cell, and the resistance (Ω) of the test cell was measured at 20 °C using an alternating current impedance method (measurement frequency of 100 kHz).

Table 2:

| | | Example | | | | | Comparative Example | | | | | |
|---|---|---|---|---|---|---|---|---|---|---|---|---|
| | | 1 | 2 | 3 | 4 | 5 | 1 | 2 | 3 | 4 | 5 | 6 |
| Binder | | Preparation Example 1 | Preparation Example 1 | Preparation Example 1 | Preparation Example 1 | Preparation Example 2 | Preparation Example 3 | Preparation Example 4 | Preparation Example 5 | Preparation Example 1 | Preparation Example 1 | Preparation Example 1 |
| Filler | Shape | Cubic | Cubic | Cubic | Cubic | Cubic | Cubic | Cubic | Cubic | Cubic | Cubic | Cubic |
| | D50 | 200 | 200 | 150 | 250 | 200 | 200 | 200 | 200 | 300 | 30 | 200 |
| Binder : Filler | | 1:20 | 1:20 | 1:20 | 1:20 | 1:20 | 1:20 | 1:20 | 1:20 | 1:20 | 1:20 | 1:20 |
| Adhesive binder | Type | PVDF-HFP | PVDF-HFP | PVDF-HFP | PVDF-HFP | PVDF-HFP | PVDF-HFP | PVDF-HFP | PVDF-HFP | PVDF-HFP | PVDF-HFP | acrylate |
| | Content | 0.6 | 0.6 | 0.6 | 0.6 | 0.6 | 0.6 | 0.6 | 0.6 | 0.6 | 0.6 | 0.6 |
| Total thickness of heat-resistant layer | | 1.0 | 1.3 | 1.0 | 1.0 | 1.0 | 1.0 | 1.0 | 1.0 | 1.0 | 1.0 | 1.0 |
| Total loading amount of adhesive binder | | 1.4 | 1.8 | 1.4 | 1.3 | 1.3 | 1.4 | 1.4 | 1.4 | 1.2 | 1.6 | 1.05 |
| Coating density | | 1.4 | 1.4 | 1.4 | 1.3 | 1.3 | 1.4 | 1.4 | 1.4 | 1.2 | 1.6 | 1.05 |
| Air permeability | | 166 | 172 | 169 | 165 | 168 | 170 | 167 | 166 | 164 | 261 | 168 |
| Thermal shrinkage rate (MD/TD) | | 3.2/1.1 | 1.6/0.9 | 1.8/1.3 | 2.2/0.8 | 2.8/1.1 | 15.1/10.9 | 16.5/11.8 | 17.4/12.8 | 6.5/4.1 | 3.6/1.0 | 4.0/2.8 |
| Positive electrode adhesive strength | | 0.76 | 0.88 | 0.82 | 0.80 | 0.79 | 0.70 | 0.72 | 0.75 | 0.81 | 0.87 | 0.24 |
| Membrane resistance | | 0.74 | 0.84 | 0.78 | 0.84 | 0.83 | 1.24 | 1.32 | 1.20 | 0.72 | 0.95 | 0.84 |

As in Table 2 above, the separators for a rechargeable lithium battery of Examples exhibited low membrane resistance and a low thermal shrinkage rate, and provided high adhesive strength and low air permeability.

A separator for a rechargeable lithium battery according to one example embodiment can have low membrane resistance and a low thermal shrinkage rate, thereby improving the capacity, safety, and service life of the battery.

Although example embodiments of the present disclosure have been described above, the present disclosure is not limited thereto and may be modified in any form within the scope of the claims, the detailed description of the present disclosure, and the accompanying drawings, and the modifications also fall within the scope of the present disclosure.

## Claims

1. A separator (30) for a rechargeable lithium battery (100), the separator (30) comprising:

   a porous base (1); and
   a coating layer (2) on at least one surface of the porous base (1),
   wherein the coating layer (2) includes a heat-resistant layer (5) including a binder and a filler (3), and an adhesive layer (7) on the heat-resistant layer (5) and including an adhesive binder (6),
   the binder includes a (meth)acryl-based binder (4) including a first structural unit derived from (meth)acrylic acid, (meth)acrylate, or salts thereof, a second structural unit derived from a hydroxyalkyl (meth)acrylate, and a third structural unit derived from (meth)acrylamido sulfonic acid or a salt thereof,
   the filler (3) includes a cubic filler having a particle size D50 that ranges from 50 nm to 250 nm and
   the adhesive binder (6) includes a fluorine-based adhesive binder having a carboxylic acid group or a hydroxy group.

2. The separator of claim 1, wherein a mass ratio of the (meth)acryl-based binder to the filler ranges from 1: 10 to 1:50.

3. The separator of claim 1 or 2, wherein the filler (3) has a specific surface area of 30 $m^2/g$ or less.

4. The separator of any one of the preceding claims, wherein the filler (3) comprises boehmite.

5. The separator of any one of the preceding claims, wherein:

   the first structural unit is represented by at least one of Chemical Formula 1, Chemical Formula 2, and Chemical Formula 3:

Chemical Formula 1: Chemical Formula 2: Chemical Formula 3:

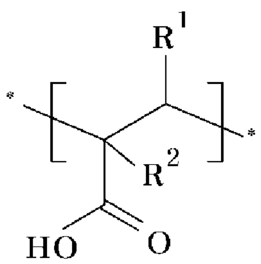

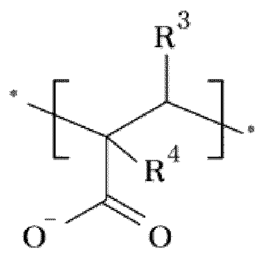

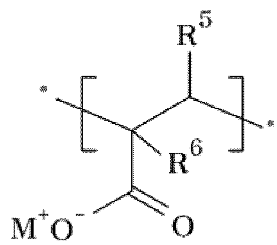

;

   the second structural unit is represented by Chemical Formula 4:

Chemical Formula 4:

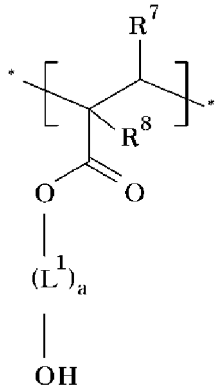

;

the third structural unit is represented by at least one of Chemical Formula 5, Chemical Formula 6, and Chemical Formula 7:

Chemical Formula 5: Chemical Formula 6: Chemical Formula 7:

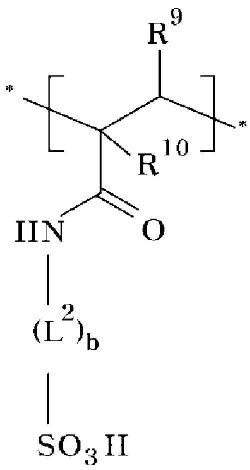

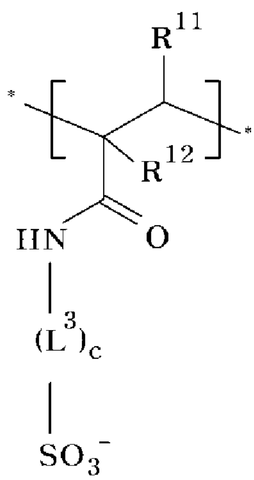

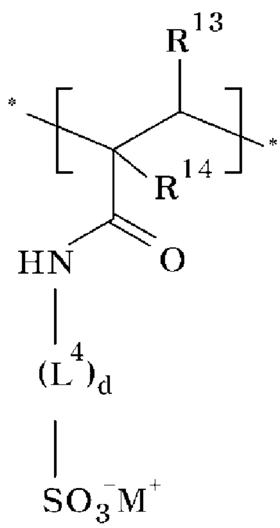

;

and

in Chemical Formulas 1 to 7,

$R^1$ to $R^{14}$ each independently comprises hydrogen or a C1 to C10 alkyl group,

$L^1$ to $L^4$ each independently comprises a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group,

a, b, c, and d are, each independently, an integer ranging from 0 to 2, and

M comprises an alkali metal,

wherein "substitution" indicates that hydrogen is substituted with a substituent selected from the group consisting of of a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group ($-NO_2$), a cyano group (-CN), an amino group (-NRR') (here, R and R' are each independently hydrogen or a C1 to C6 alkyl group), a sulfobetaine group ($-RR'N+(CH_2)_nSO_3-$, n is a natural number from 1 to 10), a carboxybetaine group ($-RR'N+(CH_2)_nCOO-$, n is a natural number from 1 to 10) (here, R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$), a carbamoyl group ($-C(O)NH_2$), a thiol group (-SH), an acyl group (-C(=O)R, here,

R denotes hydrogen, a C1 to C6 alkyl group, a C1 to C6 alkoxy group , or a C6 to C12 aryl group), a carboxyl group (-COOH) or a salt thereof (-C(=O)OM, here, M denotes an organic or inorganic cation), a sulfonic acid group ($-SO_3H$) or a salt thereof ($-SO_3M$, here, M denotes an organic or inorganic cation), and a phosphate group ($-PO_3H_2$) or a salt thereof ($-PO_3MH$ or $-PO_3M_2$, here, M denotes an organic or inorganic cation).

**6.** The separator of any one of the preceding claims, wherein, with respect to 100 mol% of the (meth)acryl-based binder:

the first structural unit is included in an amount ranging from 25 mol% to 65 mol%,
the second structural unit is included in an amount ranging from 1 mol% to 20 mol%, and
the third structural unit is included in an amount ranging from 20 mol% to 65 mol%.

**7.** The separator of any one of the preceding claims, wherein the (meth)acryl-based binder is represented by Chemical Formula 8:

Chemical Formula 8:

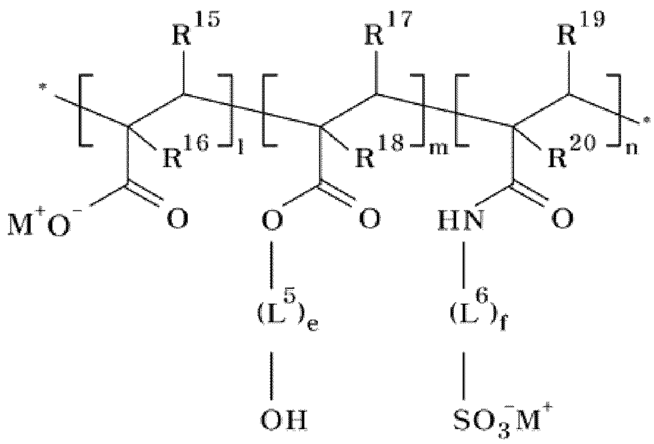

,

and
in Chemical Formula 8,

$R^{15}$ to $R^{20}$ each independently comprises hydrogen or a C1 to C10 alkyl group,
$L^5$ and $L^6$ each independently comprises a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group,
M comprises an alkali metal, e and f are, each independently, an integer ranging from 0 to 2,and
1, m, and n are the molar ratio of each structural unit, where l+m+n = 1,
wherein "substitution" indicates that hydrogen is substituted with a substituent selected from the group consisting of of a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group ($-NO_2$), a cyano group (-CN), an amino group (-NRR') (here, R and R' are each independently hydrogen or a C1 to C6 alkyl group), a sulfobetaine group ($-RR'N+(CH_2)_nSO_3-$, n is a natural number from 1 to 10), a carboxybetaine group ($-RR'N+(CH_2)_nCOO-$, n is a natural number from 1 to 10) (here, R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$), a carbamoyl group ($-C(O)NH_2$), a thiol group (-SH), an acyl group (-C(=O)R, here, R denotes hydrogen, a C1 to C6 alkyl group, a C1 to C6 alkoxy group , or a C6 to C12 aryl group), a carboxyl group (-COOH) or a salt thereof (-C(=O)OM, here, M denotes an organic or inorganic cation), a sulfonic acid group ($-SO_3H$) or a salt thereof ($-SO_3M$, here, M denotes an organic or inorganic cation), and a phosphate group ($-PO_3H_2$) or a salt thereof ($-PO_3MH$ or $-PO_3M_2$, here, M denotes an organic or inorganic cation).

**8.** The separator of any one of the preceding claims, wherein the adhesive binder comprises a poly(vinylidene fluoride)-based binder including a structural unit derived from vinylidene fluoride and a repeating unit derived from

a monomer having at least one carboxylic acid group or hydroxy group.

**9.** The separator of claim 8, wherein the poly(vinylidene fluoride)-based binder further comprises a repeating unit derived from at least one or more of trichloroethylene, chlorotrifluoroethylene, trifluoroethylene, hexafluoropropylene, ethylene tetrafluoride, and an ethylene monomer.

**10.** The separator of any one of the preceding claims, wherein a total thickness of the coating layer (2) ranges from 0.1 μm to 1.5 μm.

**11.** A rechargeable lithium battery (100) comprising:

a positive electrode (10);
a negative electrode (20); and
the separator (30) of claim 1 between the positive electrode (10) and the negative electrode (20).

FIG. 1

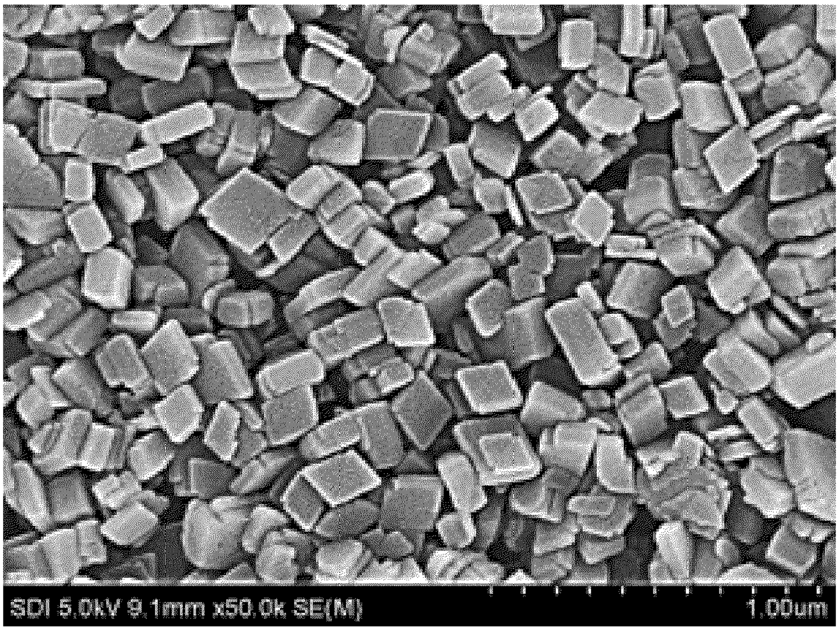


FIG. 2

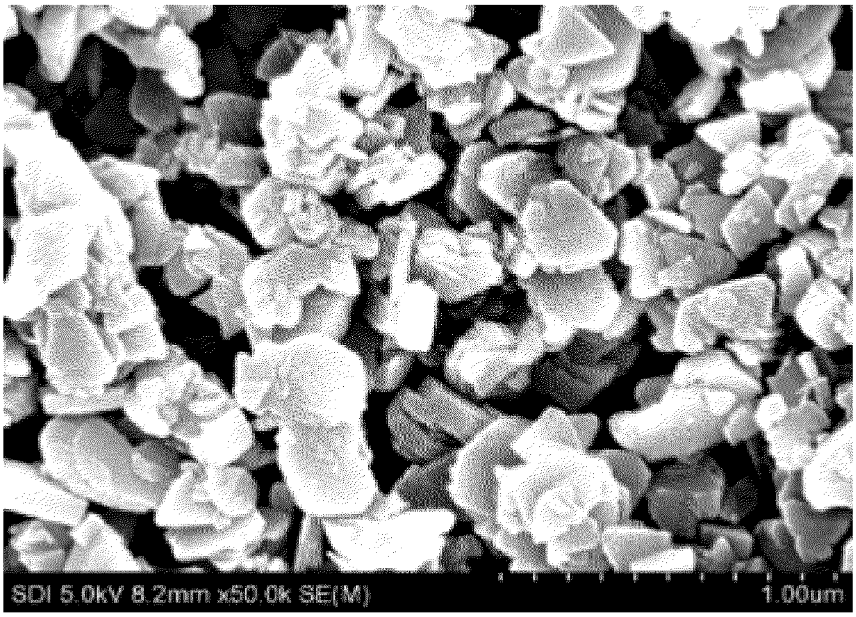

FIG. 3

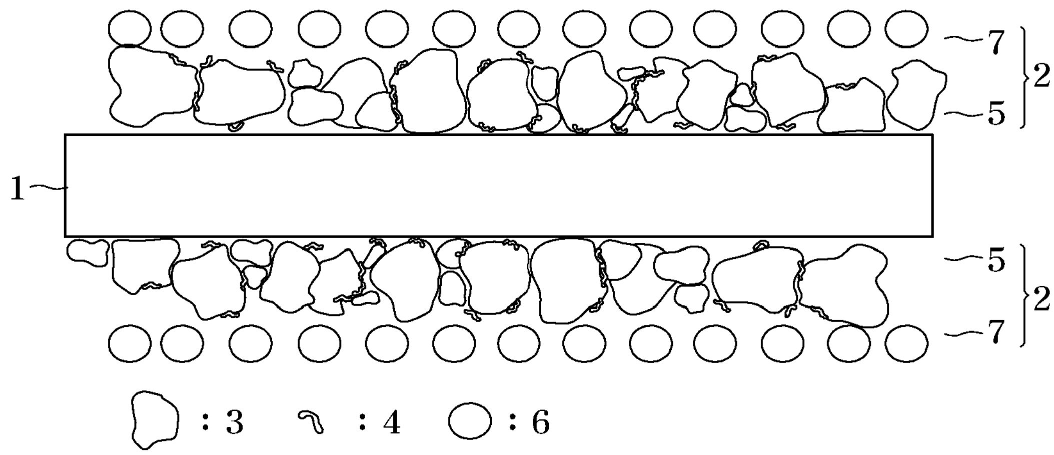

FIG. 4

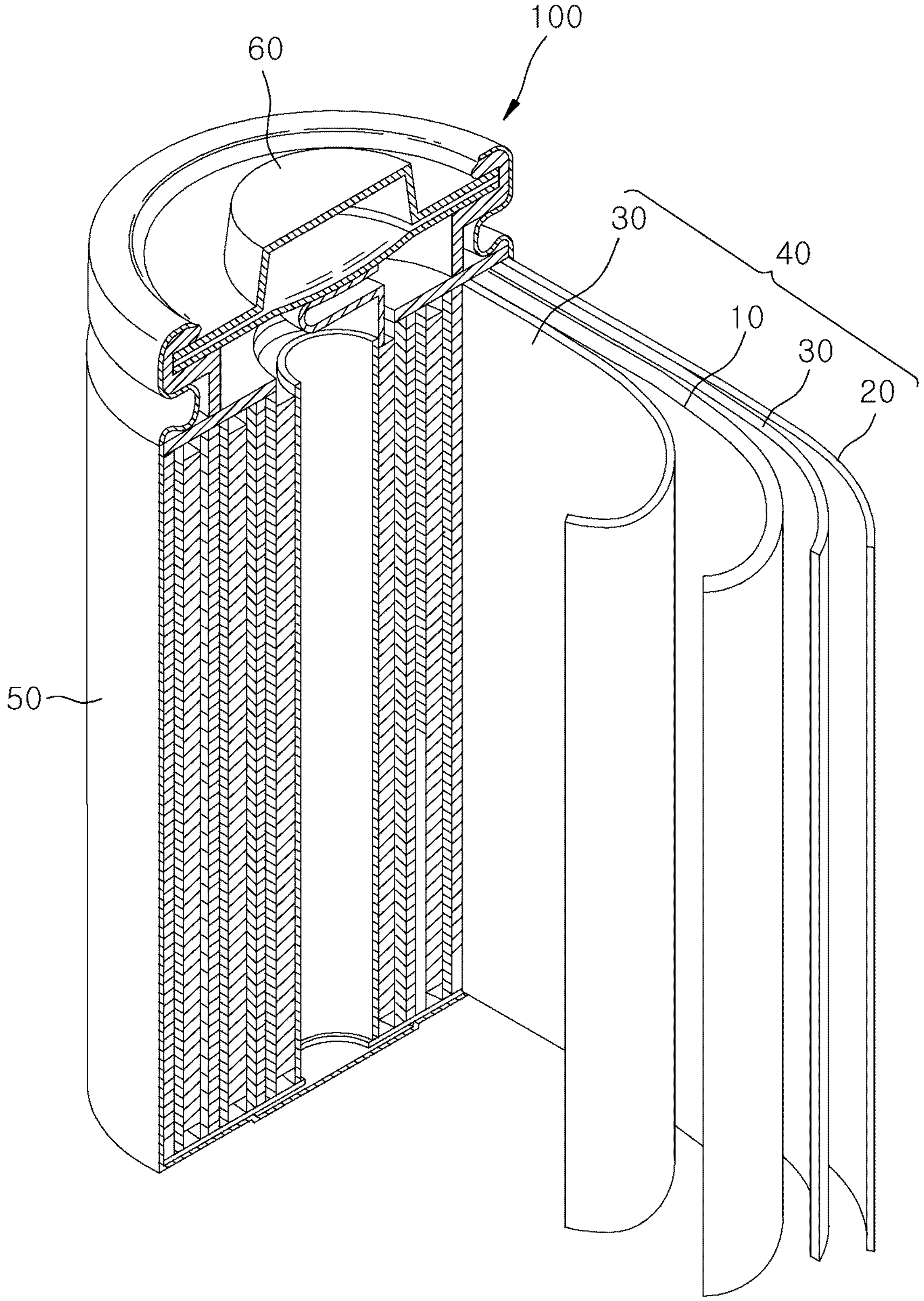

FIG. 5

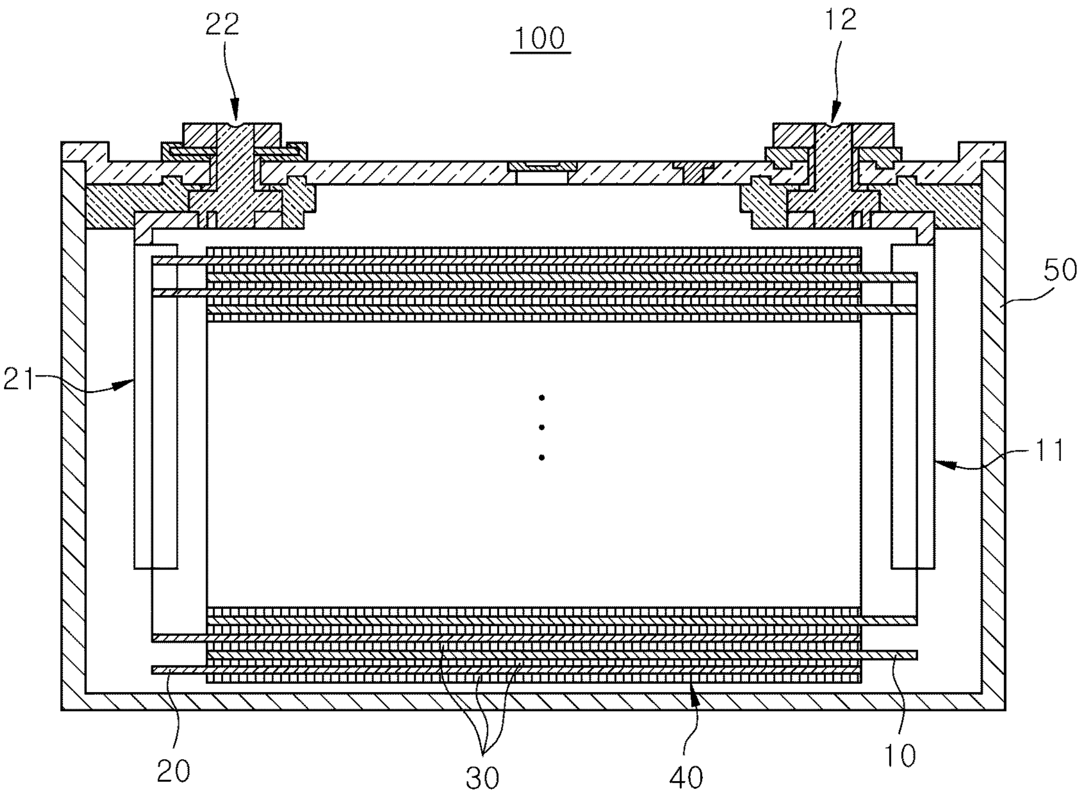

FIG. 6

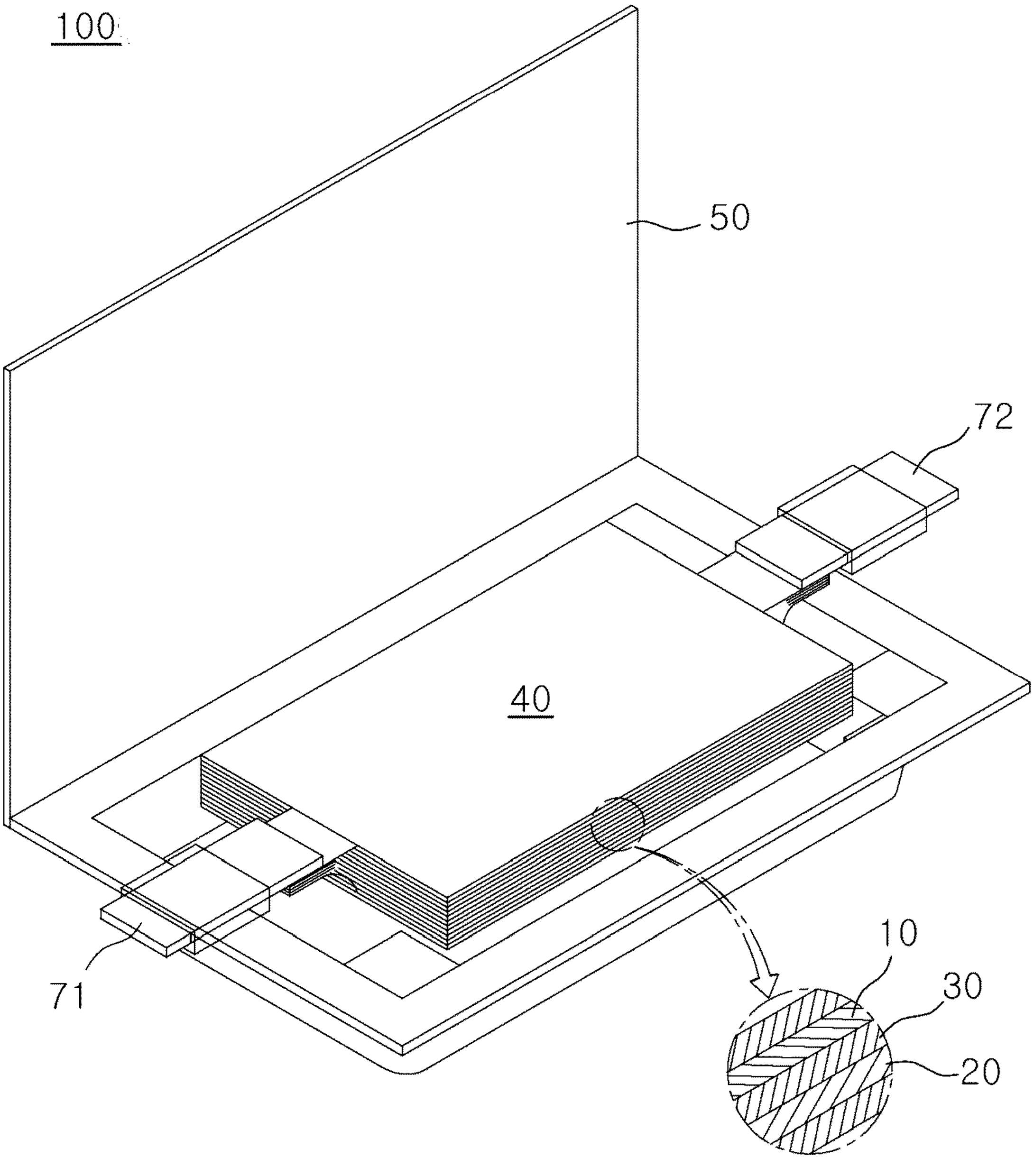

FIG. 7

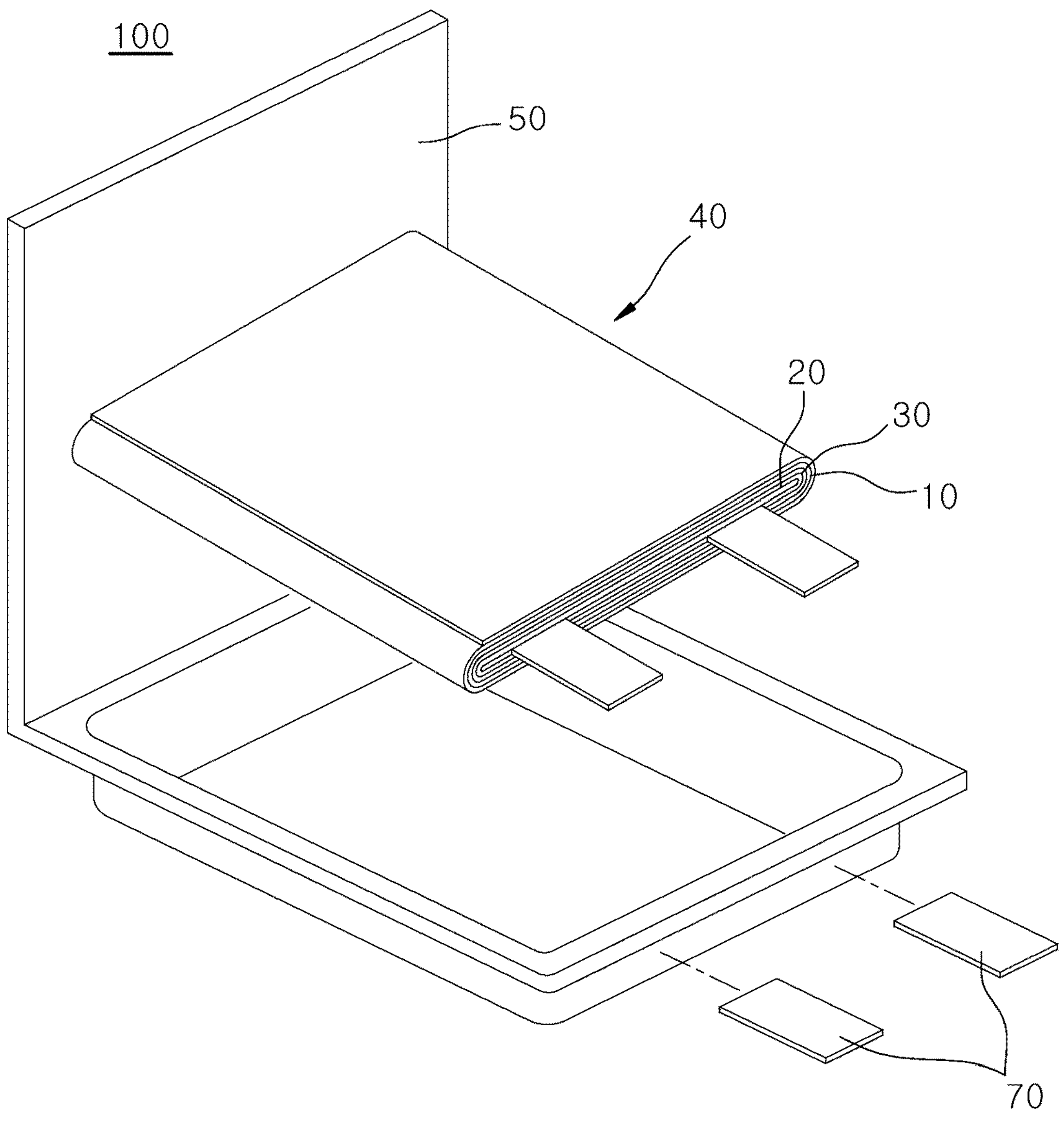

FIG. 8A

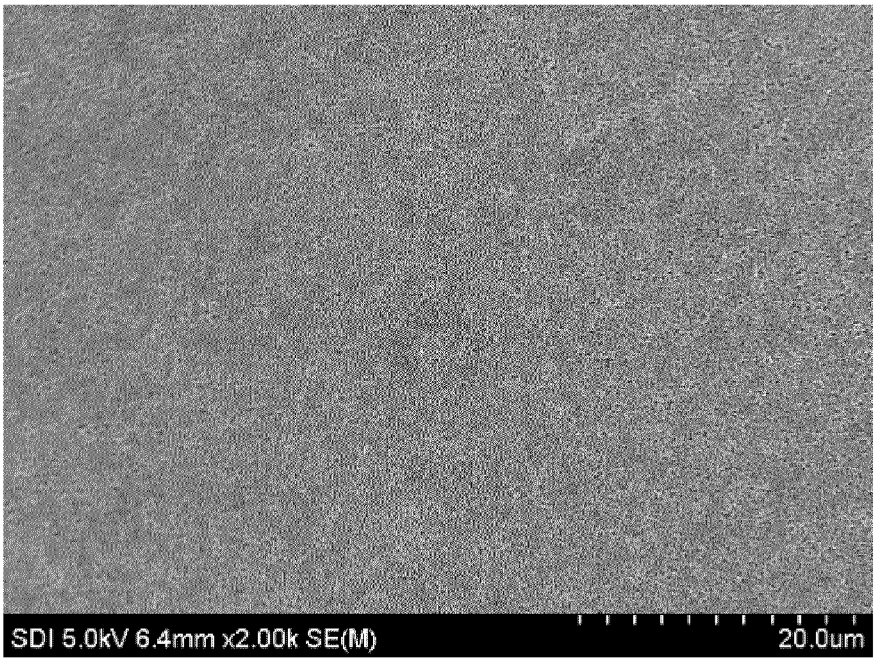


FIG. 8B

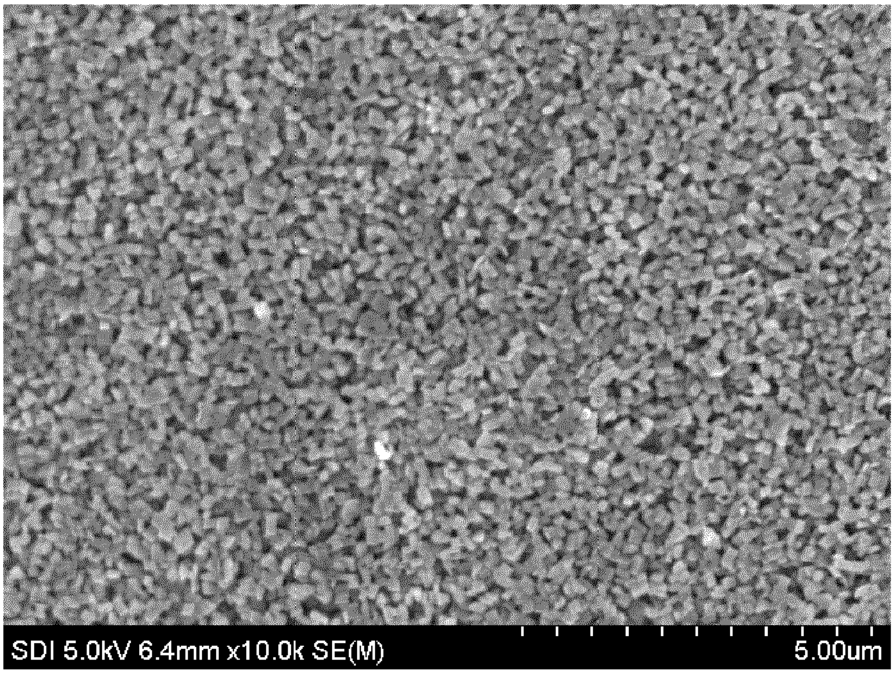

FIG. 9A

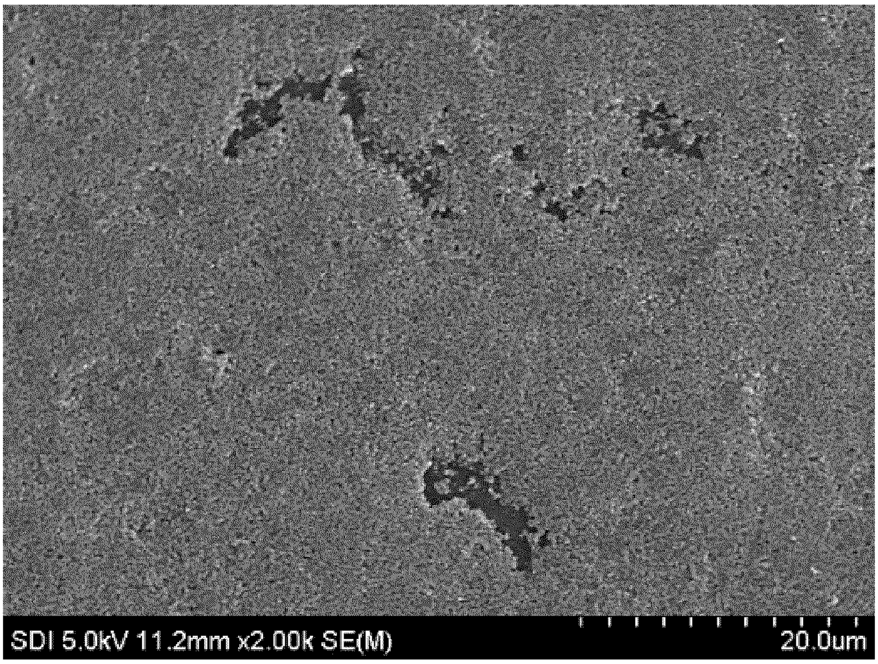


FIG. 9B